# EUROPEAN PATENT APPLICATION

(11) **EP 3 147 772 A1**
(43) Date of publication of application: **29.03.2017**
(21) Application number: 16176990.6
(22) Date of filing: 29.06.2016
(51) Int. Cl.: G06F 3/147, G09G 3/20, G06F 3/14, G06F 1/16

(54) **DISPLAY DEVICE AND OPERATING METHOD THEREOF**

(30) Priority: 24.09.2015 KR 20150135332
(71) Applicant: LG ELECTRONICS INC., Yeongdeungpo-gu Seoul 07336 (KR)
(72) Inventor: YOON, Sunghye, 06772 SEOUL (KR); KIM, Sujin, 06772 SEOUL (KR)
(74) Representative: Cabinet Plasseraud

(57) **Abstract**

A display device according to an embodiment includes a display unit configured to display information on a screen, and a control unit configured to receive a capture command, capture the information displayed on the screen and remaining information not displayed on the screen on the basis of the received capture command, and display the captured remaining information on an extended area if the screen is extended.

## Description

### BACKGROUND

The present disclosure relates to a display device and a method for operating the same, and more particularly, to a display device for providing captured information so that the captured information is suitable for a viewpoint of a user even if a display environment at the time of capturing the information is different from the display environment at the time of displaying the captured information and a method for operation the same.

A display device can capture an image and can display the captured image. The display device can be implemented as a mobile device, which may display only a part of information since a display area of the mobile device is limited due to a compact size thereof. That is, the mobile device may display a partial area without displaying the other area. Therefore, if information is captured, only information of an area displayed by the mobile device can be stored as an image.

Furthermore, the mobile device can display an area which has not been displayed, in response to a scrolling operation. Here, the mobile device can divide an entire information area into a plurality of areas to capture and store images thereof. A plurality of stored images have a vertical or horizontal positional relationship thereamong within information. If displaying the images, the mobile device displays the images in order in which the images were stored horizontally or arranged according to a certain criterion.

However, according to the related art, captured information may not be provided so as to be suitable for a viewpoint of a user in cases if there is a difference between the display environment at the time of capturing the information and the display environment at the time of displaying the captured information.

### SUMMARY

Embodiments provide a technology for providing captured information so that the captured information is suitable for a viewpoint of a user in cases if there is a difference between a display environment at the time of capturing the information and the display environment at the time of displaying the captured information.

Embodiments also provide a method for editing information to be captured and captured information according to a user's intention using a flexible display device.

In one embodiment, a display device includes: a display unit configured to display information on a screen; and a control unit configured to receive a capture command, capture the information displayed on the screen and remaining information not displayed on the screen on the basis of the received capture command, and display the captured remaining information on an extended area if the screen is extended.

The control unit may display the captured remaining information on the extended area while displaying the information on a pre-extension screen.

If the screen of the display unit is extended, the extended screen may include a plurality of areas for respectively displaying a plurality of contents, and the control unit may capture a part of information of the content displayed on the plurality of areas and remaining information of the content not displayed on each area upon receiving the capture command, and may arrange the plurality of captured contents according to a display direction of the display unit upon receiving a display command.

The control unit may rearrange the plurality of captured contents so that the plurality of captured contents are suitable for a vertical view direction if the display direction of the display unit is a horizontal view direction at a capturing time and the display direction of the display unit is the vertical view direction at a time of receiving the display command.

If the display direction is the horizontal view direction, the plurality of areas may include a first area and a second area, and a part of information of first content and a part of information of second content may be arranged so as to be displayed on the first area and the second area respectively, and, if the display direction is the vertical view direction, the control unit may rearrange the plurality of contents in order of the captured part of information of the first content, the captured remaining information of the first content, the captured part of information of the second content, and the captured remaining information of the second content.

The control unit may receive a content list display command, and may display a content list including a capture folder in response to the received content list display command, and, if the content is a web page of a website, the capture folder may include a first capture view item for providing, at one time, captured images of web pages respectively corresponding to a plurality of websites and a second capture view item for providing captured images of web pages corresponding to a single website.

If a request for selecting the first capture view item is received, the control unit may respectively display, on the plurality of areas, the captured images of the web pages respectively corresponding to the plurality of websites.

If a request for selecting the second capture view item is received, the control unit may respectively display, on the plurality of areas, the captured images of the web pages respectively corresponding to the single website.

The plurality of areas may include a first area and a second area, a part of information of first content may be displayed on the first area, a part of information of second content may be displayed on the second area, and the control unit may receive a pinch-out input through the first area, and may switch the part of information of the second content displayed on the second area with remaining information of the first content in response to the received pinch-out input.

The display unit may be an extendable or reducible flexible display device, and the display unit may include a sensing unit configured to detect extension or reduction of the display unit.

The control unit may move the information displayed on the screen in response to a command for extending the screen of the display unit by a certain distance and then reducing the screen of the display unit by the certain distance or a command for reducing the screen of the display unit by the certain distance and then extending the screen of the display unit by the certain distance.

The control unit may display new content on the extended area in response to a motion of holding and extending the screen of the display unit, and may display content associated with the displayed content on the extended area in response to a motion of extending the screen of the display unit via a holder provided to an end portion of one side of the display unit.

A scrollbar may be further displayed on the screen of the display unit, and the control unit may change a shape of the scrollbar as the screen is extended.

The control unit may change a location of the scrollbar while moving the information displayed on the screen in response to a flicking input.

The display unit may include a transparent display.

### BRIEF DESCRIPTION OF THE DRAWINGS

Fig. 1A is a block diagram illustrating a flexible display device according to an embodiment.
Fig. 1B is a diagram for describing a pressure sensor of a sensing unit.
Fig. 1C is a diagram illustrating a display unit in which the sensing unit includes a plurality of acceleration sensors.
Figs. 2A and 2B illustrate exemplary use of a stretchable display device that is a type of a flexible display device.
Figs. 3A to 3F are diagrams illustrating a configuration and operation of a rollable display device which is a type of a flexible display device.
Fig. 4 is a block diagram for describing a mobile terminal in relation to an embodiment.
Fig. 5 is a flowchart illustrating a method for operating a flexible display device according to an embodiment.
Figs. 6A to 6D are diagrams illustrating an example in which content is displayed on each of a plurality of regions according to an embodiment.
Figs. 7A and 7B are diagrams illustrating an example in which, if web pages provided from a single website are captured, the captured web pages are arranged in a display direction according to an embodiment.
Fig. 7C is a diagram illustrating an example in which, if a screen is extended, captured information is displayed on an extended area of the screen according to an embodiment.
Figs. 8A to 8C are diagrams illustrating an example in which, if web pages respectively provided from a plurality of websites are captured, the captured web pages are arranged in the display direction according to an embodiment.
Figs. 9A to 9D are diagrams illustrating a process of providing captured images using a capture folder according to an embodiment.
Figs. 10A to 10D are diagrams illustrating a method of display switching between captured images corresponding to a plurality of websites and captured images corresponding to a single website according to an embodiment.
Figs. 11A to 11H are diagrams illustrating an embodiment in which captured images displayed on a display unit are moved according to a roll-in command or a roll-out command.
Figs. 12A and 12B are diagrams illustrating an embodiment in which captured images corresponding to different websites are provided according to a flicking input in a vertical view environment.
Figs. 13A and 13B are diagrams illustrating an example in which, if a size of a captured image is smaller than a reference size in a vertical view environment, captured images of web pages provided from a website are sequentially displayed in response to a flicking input.
Figs. 14A to 14C are diagrams illustrating an example in which a plurality of web pages are rearranged on a plurality of areas in response to a user input according to an embodiment.
Figs. 15A and 15B are diagrams illustrating an example in which a plurality of web pages are rearranged on a plurality of areas in response to a user input according to another embodiment.
Figs. 16A to 16D are diagrams illustrating an example in which a plurality of web pages are rearranged on a plurality of areas in response to a user input according to another embodiment.
Figs. 17A to 17D are diagrams illustrating an example of using information displayed on an extended area of a display unit if the display unit is extended according to an embodiment.
Figs. 18A and 18B are diagrams illustrating an example in which a plurality of web pages are rearranged on a plurality of areas in response to a user input according to another embodiment.
Figs. 19A to 19C are diagrams illustrating an example in which captured images are rearranged in response to a flicking input in a vertical view environment according to another embodiment.
Figs. 20A and 20B are diagrams illustrating that a shape or location of a scrollbar is changed as a screen is scrolled.

### DETAILED DESCRIPTION OF THE EMBODIMENTS

Embodiments of the present disclosure will be described in detail with reference to the accompanying drawings. Like reference numerals refer to like elements throughout, and overlapping descriptions are avoided. In the following description, the terms "module" and "unit" for referring to elements are given or used interchangeably in consideration of ease of description, and thus, the terms per se do not necessarily indicate different meanings or functions. Detailed descriptions of the related art are not provided so that the gist of the embodiments is not unnecessarily obscured. Furthermore, the accompanying drawings are provided only to assist with an understanding of the embodiments of the present disclosure and are not intended to limit the technical concept of the present disclosure, and should be construed as covering all modifications, equivalents or alternatives that fall within the spirit and technical scope of the present disclosure.

The term "first", "second" or the like may be used for describing various elements but does not limit the elements. Such terms are only used for distinguishing one element from other elements.

It will be understood that if an element is referred to as being "connected" or "coupled" to another element, it can be directly connected or coupled to the other element or intervening elements may be present. In contrast, if an element is referred to as being "directly connected" or "directly coupled" to another element, there are no intervening elements present.

The terms of a singular form may include plural forms unless otherwise specified.

It will be further understood that the terms "comprise", "comprising,", "include", "including", "have" and/or "having", if used herein, specify the presence of stated features, numbers, steps, operations, elements, components or combinations thereof, but do not preclude the presence or addition of one or more other features, numbers, steps, operations, elements, components or combinations thereof.

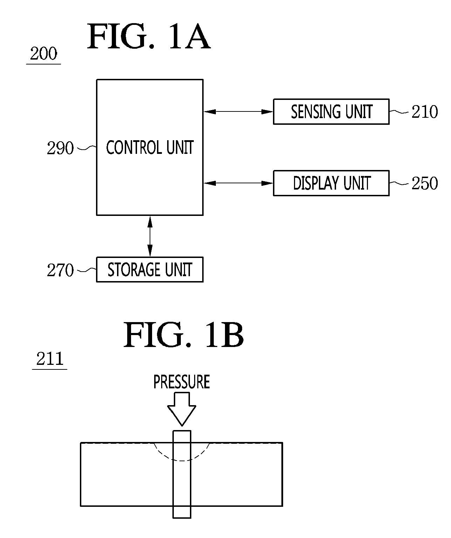

Figs. 1A to 1C are diagrams illustrating a flexible display device according to an embodiment.

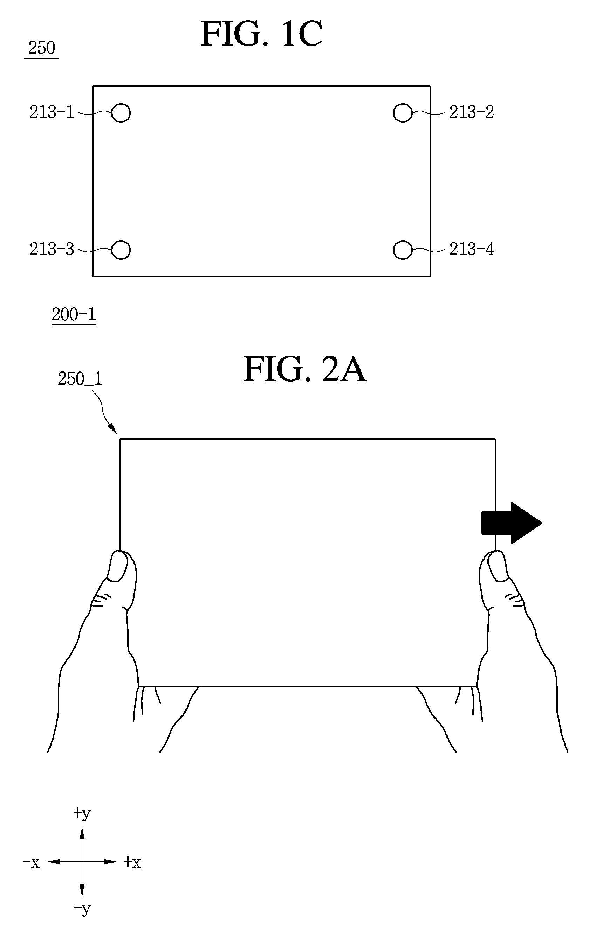

Fig. 1A is a block diagram illustrating a flexible display device 200 according to an embodiment, Fig. 1B is a diagram for describing a pressure sensor 211 of a sensing unit 210, and Fig. 1C is a diagram illustrating a display unit 250 in which the sensing unit 210 includes a plurality of acceleration sensors 213-1 to 213-4.

The flexible display device 200 according to an embodiment is a next-generation display device that is not only bendable but also stretchable and can be implemented in various and new environments, compared to typical display devices implemented using a rigid material such as glass, silicon, or the like.

In one embodiment, the flexible display device 200 can be a stretchable display device that is stretched if being pulled and recovers its original form if being released. If a certain period of time elapses while the flexible display device is being pulled and stretched, the flexible display device can be fixed in a stretched state. If a force is applied to the flexible display device, the flexible display device can contract to recover its original form.

In another embodiment, the flexible display device 200 can be a rollable display device that is able to be rolled or unrolled like paper.

Referring to Fig. 1A, the flexible display device 200 can include the sensing unit 210, the display unit 250, a storage unit 270, and a control unit 290.

The sensing unit 210 can detect extension or reduction of the display unit 250. The sensing unit 210 can detect a direction or strength of a force applied to the display unit 250.

In one embodiment, the sensing unit 210 can include at least one pressure sensor. The at least one pressure sensor can be disposed at the display unit 250. If the sensing unit 210 includes at least one pressure sensor, each pressure sensor 211 can detect a change in resistance or capacitance between both ends of an area to which a pressure (or force) is applied as illustrated in Fig. 1B. The pressure sensor 211 can transfer, to the control unit 290, at least one of a capacitance change signal indicating a detected capacitance change or a resistance change signal indicating a detected resistance change. The capacitance change signal or the resistance change signal can include information on at least one of the strength or the direction of the force applied to the pressure sensor 211. The control unit 290 can obtain at least one of the strength or the direction of the force applied to the display unit 250, using the capacitance change signal or the resistance change signal received from the pressure sensor 211.

In another embodiment, the sensing unit 210 can include the plurality of acceleration sensors 213-1 to 213-4 as illustrated in Fig. 1C. If the display unit 250 has a rectangular shape, each acceleration shape can be disposed adjacent to a vertex of a rectangle. If the display unit 250 includes a flexible substrate and an image display unit, the acceleration sensors 213-1 to 213-4 can be arranged under the flexible substrate, and the image display unit can be disposed on the flexible substrate. However, this arrangement is merely an example, and the acceleration sensors 213-1 to 213-4 can be embedded in the flexible substrate or the image display unit.

The acceleration sensor serves to detect an intensity of impact or an acceleration of an object. A motion state of the display unit 250 can be accurately detected using the acceleration sensor. The acceleration sensor can sense the acceleration of the display unit 250 in three axial (x-axis, y-axis, z-axis) directions perpendicular to each other. The control unit 290 can obtain a moving speed using a tri-axial acceleration measured by the acceleration sensor. The control unit 290 can obtain a tri-axially extended distance of the display unit 250 using the obtained moving speed. The control unit 290 can obtain the strength and the direction of the force applied to the display unit 250, using the moving speed and distance obtained using the acceleration sensor. The control unit 290 can extend the display unit 250 according to the direction and the strength of the force.

In another embodiment, the sensing unit 210 can include a plurality of hall sensors. The plurality of hall sensors can be arranged inside the display unit 250 or on the display unit 250. If the sensing unit 210 includes the plurality of hall sensors, the control unit 290 can extend or reduce the display unit 250 using voltage sensed by the hall sensors.

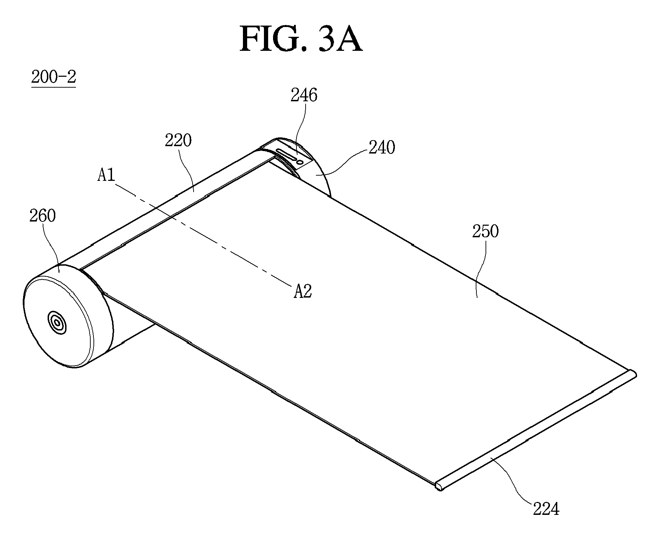

If the sensing unit 210 includes the hall sensors, an embodiment in which extension or reduction of the display unit 250 is detected using the hall sensors will be described with reference to Figs. 3A to 3F.

The display unit 250 can be stretched in at least one direction. The display unit 250 can include a flexible substrate and an image display unit. The flexible substrate can be formed of polydimethylsiloxane (PDMS) and can be extended by a pulling force. The image display unit can be disposed on the flexible substrate, and can be extended together with the flexible substrate. The image display unit can display an image.

The display unit 250 can include an organic light-emitting diode (OLED).

The storage unit 270 can store a strength of a force applied to the display unit 250 and an extension degree or a reduction degree of the display unit 250 which corresponds to the strength of the force. The extension degree of the display unit 250 can indicate an extended length of the display unit 250, and the reduction degree of the display unit 250 can indicate a reduced length of the display unit 250.

The control unit 290 can detect extension or reduction of the display unit 250 via the sensing unit 210. The extension of the display unit 250 can indicate that a size of a screen able to be displayed by the display unit 250 is increased, and the reduction of the display unit 250 can indicate that the size of the screen able to be displayed by the display unit 250 is decreased. The control unit 290 can change a graphic or an image displayed on the screen according to the increase or decrease in the size of the screen of the display unit 250.

Furthermore, the control unit 290 can control overall operation of the flexible display device 200. Operation of the control unit 290 will be described in more detail later.

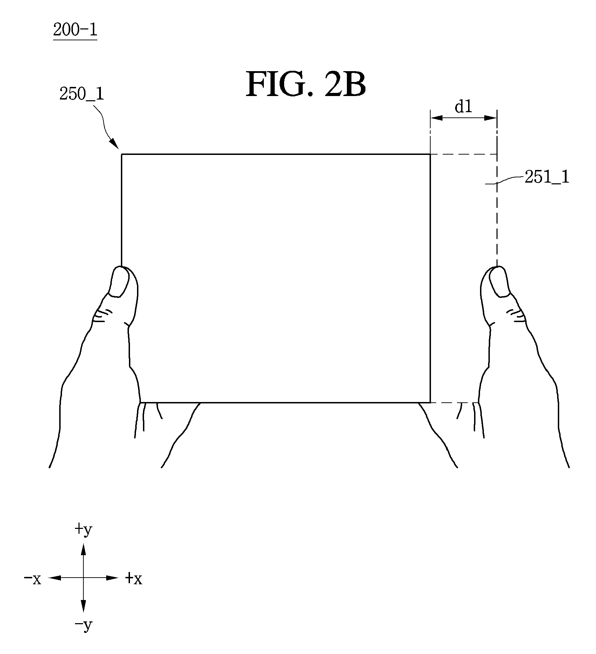

Figs. 2A and 2B illustrate exemplary use of a stretchable display device that is a type of a flexible display device.

Fig. 2A illustrates a state of a display unit 250_1 before a stretchable display unit 200_1 is stretched. In this state, if a force is applied to the display unit 250_1 in a +x-axis direction, the control unit 290 can extend the display unit 250_1 by a distance of d1 in the +x-axis direction as illustrated in Fig. 2B. As the display unit 250_1 is extended, the display unit 250 can be extended by as much as an extended area 251_1 corresponding to the extended distance d1. That is, the screen size of the display unit 250 can be increased by as much as the extended area 251_1. Fig. 2 illustrates that the force is applied in the +x-axis direction, but this is merely an example. If a force is applied to the display unit 250_1 in a -x-axis direction, the control unit 290 can allow the display unit 250_1 to recover its original size.

Figs. 3A to 3F are diagrams illustrating a configuration and operation of a rollable display device which is a type of a flexible display device according to an embodiment.

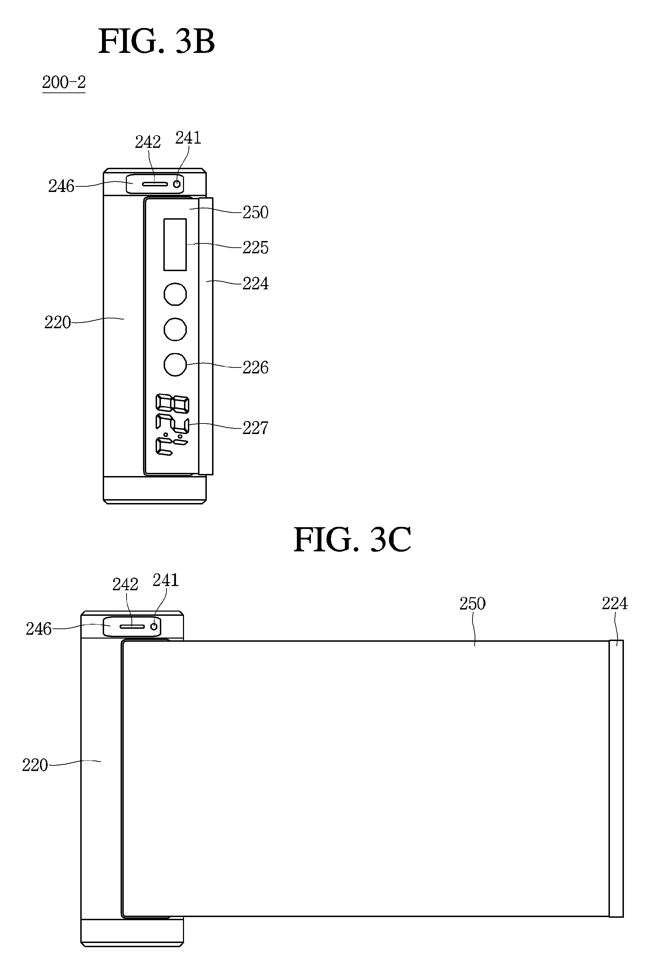

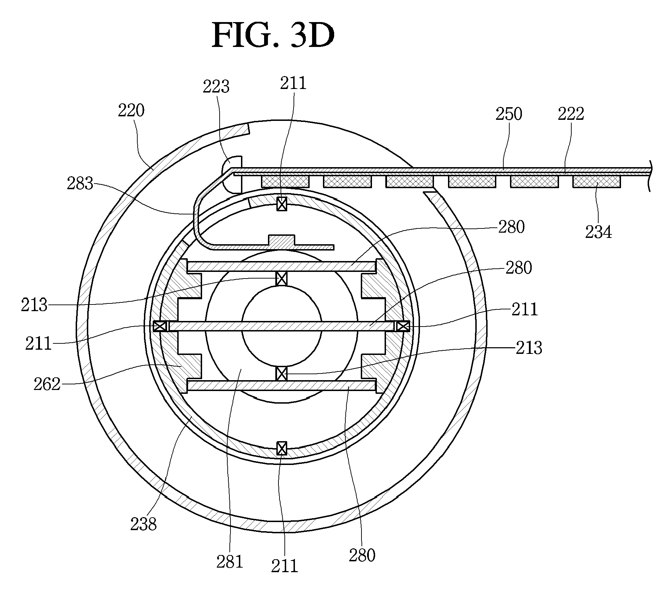

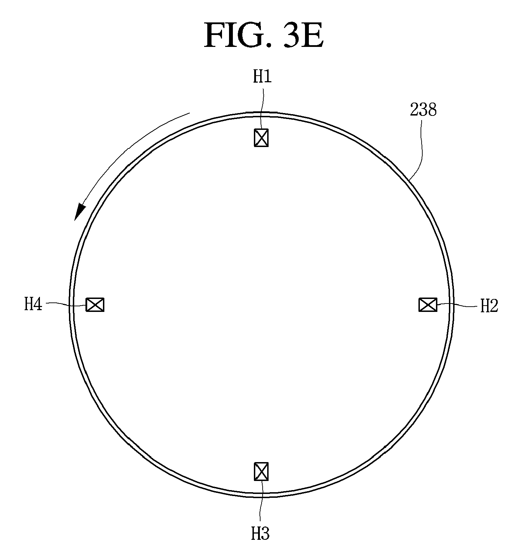

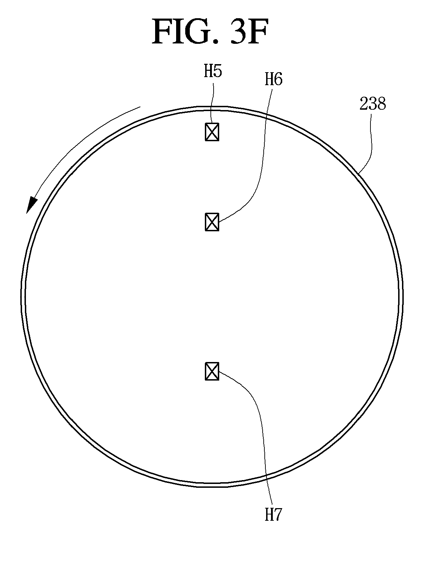

Fig. 3A is a perspective view of the rollable display device according to an embodiment, Fig. 3B is a diagram illustrating the rollable display device that is in a first operation state according to an embodiment, Fig. 3C is a diagram illustrating the rollable display device that is in a second operation state according to an embodiment, Fig. 3D is a cross-sectional view of the rollable display device taken along line A1-A2 of Fig. 3A, and Figs. 3E and 3F are diagrams illustrating a process of sensing a spread length, a rolled length, or a rotation amount of a display unit using a hall sensor according to an embodiment.

Referring to Figs. 3A to 3D, a rollable display device 200-2 can include an upper case 240, an intermediate case 220, a lower case 260, a display unit 250, a first holder 223, and a second holder 224.

The upper case 240, the lower case 260, and the intermediate case 220 form an exterior of the rollable display device 200-2. The intermediate case 220 can have a cylindrical shape, but is not limited thereto and can have various shapes such as a hexahedral shape. As illustrated in Fig. 3D, a part of the intermediate case 220 can be opened so as to expose a part of the display unit 250.

The upper case 240 and the lower case 260 can cover the intermediate case 220 at an upper side and a lower side thereof. The upper case 240 and the lower case 260 may not expose various components arranged inside the intermediate case 220. A recess part 246 can be formed in the upper case 240, wherein the recess part 246 can be recessed towards the inside of the upper case 240 so as to have a planar shape. At least one of a camera 241 or a sound output unit 242 can be disposed in the recess part 246. The first holder 223 (see Fig. 3D) can be provided to an end portion of one side of the display unit 250, and the second holder 224 can be provided to an end portion of another side of the display unit 250. The first holder 223 can prevent the display unit 250 from escaping from an inner side of the intermediate case 220 if a screen of the display unit 250 is maximally extended. The second holder 224 can prevent the display unit 250 from being rolled into the inner side of the intermediate case 220. A user can draw the second holder 224 in a specific direction to extend the screen of the display unit 250.

The display unit 250 can be rolled in towards the inner side of the intermediate case 220, or can be rolled out of the intermediate case 220. That is, the display unit 250 can be wound, rolled or coiled into the inner side of the intermediate case 220, or can be unwound, unrolled or uncoiled out of the intermediate case 220.

Fig. 3B is a diagram illustrating the first operation state of the rollable display device 200-2, and Fig. 3C is a diagram illustrating the second operation state of the rollable display device 200-2.

In a state in which the display unit 250 is not deformed (e.g., a state of having an infinite radius of curvature, hereinafter referred to as the first operation state), a region displayed by the display unit 250 can be a plane. In a state in which the display unit 250 is deformed by an external force in the first operation state (e.g., a state of having a finite radius of curvature, hereinafter referred to as the second operation state), a region displayed by the display unit 250 can be a curved surface. As illustrated in the drawings, information displayed in the second operation state can be time information output to the curved surface. Such time information can be implemented by individually controlling light emission of sub-pixels arranged in a matrix.

In the first operation state, the display unit 250 may not be flat but curved (e.g., vertically or horizontally curved). In this case, if an external force is applied to the display unit 250, the display unit 250 can be deformed to be flat (or less curved) or more curved.

The display unit 250 can be combined with a touch sensor to implement a flexible touch screen. If the flexible touch screen is touched, a control unit 290 can perform control corresponding to the touch input. The flexible touch screen can detect a touch input not only in the first operation state but also in the second operation state.

The rollable display device 200-2 according to an embodiment can be provided with a deformation detecting unit for detecting deformation of the display unit 250. The deformation detecting unit can be included in the sensing unit 210 (see Fig. 1A).

The deformation detecting unit can be provided to the display unit 250 or the intermediate case 220 so as to detect information on deformation of the display unit 250. Here, the information on deformation can include a deformation direction, a deformation degree, a deformation portion, or a deformation time of the display unit 250 or an acceleration of recovery of the display unit 250 deformed, or can additionally include various information detectable due to warpage of the display unit 250.

Furthermore, the control unit 290 can change information displayed on the display unit 250 or can generate a control signal for controlling a function of the rollable display device 200-2, on the basis of the information on deformation of the display unit 250 detected by the deformation detecting unit.

In an embodiment, the first operation state of the rollable display device 200-2 represents an inactive state in which a minimum display region is exposed to the outside so that basic information alone is displayed. The second operation state of the rollable display device 200-2 represents an active state in which the display unit 250 is extended. Extending of the display unit 250 can indicate that a screen displayed by the display unit 250 is extended. This extending includes gradational extending. A display region of the rollable display device 200-2, which is extended or reduced by rolling the display unit 250, can be implemented at one time at the moment of the extending or reducing, or the display region can be gradually extended or reduced. Therefore, hereinafter all states excepting the first operation state can be regarded as the second operation state, and the second operation state can be classified into a plurality of stages according to a degree of extension.

As illustrated in Fig. 3B, only regions such as a message window 225, an icon 226, or a time display part 227 can be displayed to minimize an exposed region of the display unit 250 in the first operation state. However, in the second operation state, the exposed region of the display unit 250 can be maximized to display information on a larger screen as illustrated in Fig. 3C. It is assumed that Fig. 3C illustrates a state in which the display unit 250 is maximally extended in some cases.

The control unit 290 (see Fig. 1A) can detect an unwound length of the display unit 250, and can turn on/off a part of the display unit 250 on the basis of the unwound length. For example, the control unit 290 can obtain a length of the display unit 250 unwound out of an opened region of the intermediate case 220. The control unit 290 can turn off the display unit 250 disposed inside the intermediate case 220, and can turn on the display unit 250 unwound out of the opened region of the intermediate case 220. Turning on a part of the display unit 250 can represent that power is applied so that the part of the display unit 250 displays information, and turning off a part of the display unit 250 can represent that power is not applied so that the part of the display unit 250 does not display information. Accordingly, since a part of the display unit 250 which is not unwound out of the intermediate case 220 is turned off, unnecessary power consumption and heating can be prevented.

Furthermore, if the display unit 250 is separated from an outer circumferential surface of an inner case 238, the control unit 290 can turn on a separated part of the display unit 250 and can turn off a non-separated part of the display unit 250. The control unit 290 can detect that the display unit 250 is separated from the outer circumferential surface of the inner case 238 using a length sensing unit 211 disposed in an inner circumferential surface of the inner case 238, so as to turn on the separated part of the display unit 250 and turn off the non-separated part of the display unit 250.

Referring to Fig. 3D, a shaft 281, the inner case 238, the length sensing unit 211, a rotation amount sensing unit 213, a plurality of circuit boards 280, a flexible circuit board 283, and a support frame 262 can be arranged in the intermediate case 220.

The shaft 281 can be rotated as the inner case 238 rotates.

The inner case 238 can be shaped like a roller, can be rollable, and can serve to wind or unwind the display unit 250. The inner case 238 is axially connected to the intermediate case 220 so as to be rotatable.

The length sensing unit 211 can sense a wound length or an unwound length of the display unit 250. The length sensing unit 211 can include a magnetic member. The length sensing unit 211 can include at least one hall sensor. The length sensing unit 211 will be described later in more detail.

The rotation amount sensing unit 213 can sense the number of turns of the display unit 250 wound on the inner case 238. That is, the rotation amount sensing unit 213 can sense the number of turns of the display unit 250 wound on the inner case 238 as the display unit 250 is rolled. The rotation amount sensing unit 213 can include a magnetic member. The rotation amount sensing unit 213 can include at least one hall sensor. The rotation amount sensing unit 213 will be described later in more detail.

A plurality of electronic circuit components for operating the rollable display device 200-2 can be mounted on each circuit board 280.

The flexible circuit board 283 can connect electronic circuit components mounted on the inner case 238 to the display unit 250. The electronic circuit component can include at least one of the sensing unit 210, the storage unit 270, or the control unit 290 illustrated in Fig. 1A.

The support frame 262 can support the circuit board 280, and can be disposed in the inner case 238.

The inner case 238 can be rotated by magnetism between the length sensing unit 211 and rolling sensing units 234 spaced apart from each other under the display unit 250. The rolling sensing unit 234 can include a magnetic member, and can include at least one hall sensor. The display unit 250 can be rotated together with the inner case 238 while being rolled on the inner case 238 by the magnetism. In detail, the display unit 250 can be rolled by attraction between the rolling sensing unit 234 and the length sensing unit 211. For example, if the length sensing unit 211 includes an N-pole magnetic member and the rolling sensing unit 234 includes an S-pole magnetic member, they attract each other. A position of the length sensing unit 211 can be fixed. The rolling sensing unit 234 is attracted towards the length sensing unit 211 while moving linearly, and the rolling sensing units 234 spaced apart from each other are continually introduced into the intermediate case 220. Since the rolling sensing unit 234 that has been already introduced and the length sensing unit 211 continuously attract each other, the rolling sensing unit 234 newly introduced and the length sensing unit 211 maintain a balance in terms of attraction so that the rolling sensing units 234 are rotated around the length sensing units 211. By virtue of this mechanism, the display unit 250 is wound while being rolled.

A sheet 222 provided with the rolling sensing unit 234 can be disposed on a lower surface of the display unit 250. The sheet 222 can be included in the display unit 250, or can be present independently from the display unit 250. The sheet 222 can be flexible. For example, the sheet 222 can be silicone or Thermoplastic Poly Urethane (TPU). The sheet 222 can be bonded to the lower surface of the display unit 250 in the form of a sheet frame, can sequentially fix the rolling sensing units 234, and can be formed through bonding, tape or insert molding. Furthermore, the sheet 222 can be formed of a material that is flexible, has excellent elasticity and elongation, and enables maintenance of a small thickness of the sheet 222. This is intended to allow the rolling sensing units 234 to have the same magnetic pole so that the display unit 250 is spread flat by repulsion. That is, the rolling sensing units 234 having the same magnetic pole repel each other by a repulsive force so that the display unit 250 is spread flat.

The length sensing unit 211 can sense magnetism between the rolling sensing unit 234 and the length sensing unit 211 to calculate the wound length or the unwound length of the display unit 250. The rotation amount sensing unit 213 can sense the number of turns of the display unit 250 wound on the outer circumferential surface of the inner case 238. This will be described later in more detail with reference to Figs. 3E and 3F.

Referring to Fig. 3E, the length sensing unit 211 can include four hall sensors H1 to H4. The four hall sensors are arranged on the inner circumferential surface of the inner case 238 or an inner space thereof along a circumferential direction of the inner case 238, while being spaced apart from each other by a fixed distance. Here, first to fourth hall sensors H1 to H4 sense movement of the rolling sensing unit 234 by sensing a change of magnetism in the circumferential direction of the inner case 238.

The arrows of Figs. 3E and 3F represent a rotation direction of the inner case 238. The first hall sensor H1 alone senses the rolling sensing unit 234 in the second operation state in which the display unit 250 is maximally exposed as the inner case 238 is rotated. Thereafter, if the inner case 238 is rotated counterclockwise, the display unit 250 is wound on the inner case 238, and the second to fourth hall sensors H2 to H4 sequentially sense the rolling sensing unit 234. As described above, the first to fourth hall sensors H1 to H4 provide information for measuring a length of the display unit 250 wound along the outer circumferential surface of the inner case 238. The control unit 290 can detect a sensor that lastly senses the rolling sensing unit 234 if the display unit 250 is wound or unwound. Accordingly, the control unit 290 can calculate the wound length or the unwound length of the display unit 250. This is the same for the case where the display unit 250 is wound on the inner case 238 by multiple turns.

If the display unit 250 is wound on the outer circumferential surface 238 in two or more layers, magnetism is changed in a radial direction of the inner case 238. Therefore, if a hall sensor for sensing the change is provided, the wound length of the display unit 250 can be measured more accurately.

For example, as illustrated in Fig. 3F, if two or more hall sensors are spaced apart from each other by a fixed distance in a radial direction of the inner case 238, a magnetism change of the rolling sensing unit 234 stacked in two or more layers on the outer circumferential surface of the inner case 238 can be sensed, so that the wound length of the display unit 250 can be calculated more accurately. Although Fig. 3F illustrates three hall sensors, i.e., fifth to seventh hall sensors H5 to H7, this is merely an example. That is, the fifth to seventh hall sensors H5 to H7 sense a magnetism change in a radial direction of the inner case 238 due to the rolling sensing unit 234.

In more detail, in the second operation state (i.e., the state illustrated in Fig. 3D), the control unit 290 can calculate the wound length of the display unit 250 using the first to fourth hall sensors H1 to H4 while the display unit 250 is wound in one layer on the inner case 238. If the display unit 250 is wound in two layers on the inner case 238, the fifth to seventh hall sensors H5 to H7 sense a change of magnetism in a radial direction. The control unit 290 can obtain the number of turns of the display unit 250 wound, using the magnetism change sensed by the fifth to seventh hall sensors H5 to H7. A length of the display unit 250 wound thereafter can be calculated using the first to fourth hall sensors H1 to H4, and, if the display unit 250 is stacked in three layers in a radial direction in which the fifth to seventh hall sensors H5 to H7 are arranged, the magnetism change is sensed by the fifth to seventh hall sensors H5 to H7. As described above, the control unit 290 can calculate the length of the display unit 250 wound on the outer circumferential surface of the inner case 238 using the first to fourth hall sensors H1 to H4, and can calculate the number of turns of the display unit 250 wound on the outer circumferential surface of the inner case 283 using the fifth to seventh hall sensors H5 to H7.

According to another embodiment, the rollable display device 200-2 can be additionally provided with the upper case 240, the intermediate case 220, and the lower case 260 at another end portion of the display unit 250. The elements described above with reference to Fig. 3D can be included in the intermediate case 220. Therefore, a user can grip the rollable display device 200-2 with both hands to extend or reduce the display unit 250.

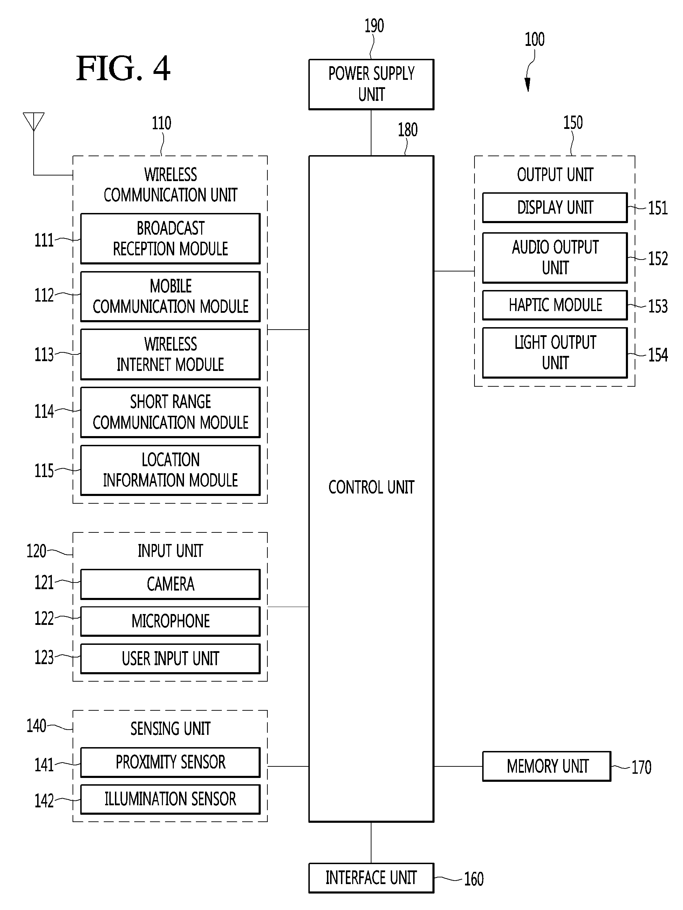

The flexible display device 200 can include all configurations of a mobile terminal 100 described below with reference to Fig. 4.

A mobile terminal included in the flexible display device 200 will be described with reference to Fig. 4.

The mobile terminal described herein can include a cell phone, a smartphone, a laptop computer, a terminal for a digital broadcast, a personal digital assistant (PDA), a portable multimedia player (PMP), a navigator, a slate PC, a tablet PC, an ultrabook, a wearable device (e.g., a smartwatch, smart glasses, or a head mounted display (HMD)), or the like.

However, those skilled in the art would understand that configurations according to the embodiments described herein can also be applied to not only mobile devices but also non-mobile devices such as digital TVs, desktop computers or digital signage.

Fig. 4 is a block diagram for describing a mobile terminal in relation to an embodiment.

The flexible display device 200 can include elements of a mobile terminal 100. In particular, the sensing unit 210 of the flexible display device 200 can perform a function of a sensing unit 140 of the mobile terminal 100, the display unit 250 can perform a function of a display unit 151 of the mobile terminal 100, and the storage unit 270 can perform a function of a memory 170 of the mobile terminal 100.

The mobile terminal 100 can include a wireless communication unit 110, an input unit 120, a sensing unit 140, an output unit 150, an interface unit 160, a memory unit 170, a control unit 180, and a power supply unit 190. Since the elements illustrated in Fig. 4 are not essential for realizing a mobile terminal, a mobile terminal to be described herein can include more or fewer elements than the above-described.

In detail, the wireless communication unit 110 among the elements can include one or more modules enabling wireless communication between the mobile terminal 100 and another mobile terminal 100, or between the mobile terminal 100 and an external server. In addition, the wireless communication 110 can include one or more modules connecting the mobile terminal 100 to one or more networks.

The wireless communication unit 110 can include at least one of a broadcast reception module 111, a mobile communication module 112, a wireless internet module 113, a short range communication module 114, and a location information module 115.

The input unit 130 can include a camera 121 or an image input unit for an image signal input, a microphone 122 or an audio input unit for an audio signal input, a user input unit 123 (e.g., a touch key, a mechanical key, etc.) for receiving information from a user. Voice data or image data collected by the input unit 120 can be analyzed and processed with user's control commands.

The sensing unit 140 can include at least one sensor for sensing at least one of surrounding environment information around the mobile terminal and user information. For example, the sensing unit 140 can include at least one selected from a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (e.g., the camera (see 121)), a microphone (see 122), a battery gauge, an environmental sensor(e.g., a barometer, a hygrometer, a thermometer, a radiation sensor, a thermal sensor, a gas detection sensor, etc.), a chemical sensor(e.g., an e-nose, a healthcare sensor, a biometric sensor, etc.). Furthermore, the mobile terminal disclosed herein can combine and use information sensed by at least two sensors among those sensors.

The output unit 150 is for generating an output related to sense of sight, sense of hearing, or sense of touch, and can include at least one selected from a display unit 151, an audio output unit 152, a haptic module 153, and a light output unit 154. The display unit 151 can form a mutually layered structure with or be formed into one with a touch sensor, and realize a touch screen. Such a touch screen may not only function as the user input unit 123 providing an input interface between the mobile terminal 100 and the user, but also provide an output interface between the mobile terminal 100 and the user.

The interface unit 160 plays a role of a passage with various kinds of external devices connected to the mobile terminal 100. This interface unit 160 can include at least one selected from a wired/wireless headset port, an external charger port, a wired/wireless data port, a memory card port, a port connecting a device having an identification module prepared therein, an audio input/output (I/O) port, a video input/output (I/O) port, and an earphone port. In the mobile terminal 100, a proper control can be performed on a connected external device in correspondence to connection between the external device and the interface unit 160.

In addition, the memory 170 stores data for supporting various functions of the mobile terminal 100. The memory 170 can store a plurality of application programs or applications driven in the mobile terminal 100, data for operations of the mobile terminal 100, and instructions. At least a part of these application programs can exist in the mobile terminal 100 at the time of release for basic functions (e.g., a call originating or receiving function, a message transmitting and receiving function). Moreover, the application programs are stored in the memory 170 and installed in the mobile terminal 100, and then can be driven to perform operations (or functions) of the mobile terminal by the control unit 180.

The control unit 180 typically controls overall operations of the mobile terminal 100 besides operations related to the application programs. The control unit 180 can provide the user with, or process proper information or functions by processing a signal, data, or information input or output through the above-described elements, or driving the application programs stored in the memory 170.

In addition, the control unit 180 can control at least a part of the elements illustrated in Fig. 4 so as to drive the application programs stored in the memory 170. Furthermore, the control unit 180 can combine at least two elements among the elements included in the mobile terminal 100 and operate the combined.

The power supply unit 190 receives internal or external power under a control of the control unit 180 and supplies the power to each element included in the mobile terminal 100. The power supply unit 190 includes a battery and the battery can be an embedded type battery or a replaceable battery.

At least a part of the elements can operate in cooperation with each other for realizing an operation, control, or control method of the mobile terminal according to various embodiments. In addition, the operation, control, or control method of the mobile terminal can be realized in the mobile terminal by driving at least one application program stored in the memory 170.

Hereinafter, the above-described elements are described in detail with reference to Fig. 4 before describing various embodiments realized through the mobile terminal 100.

Firstly, in the wireless communication unit 110, the broadcast reception module 111 receives a broadcast signal and/or broadcast related information from an external broadcast management server through a broadcast channel. The broadcast channel can include a satellite channel or a terrestrial channel. Two or more broadcast reception modules can be provided to the mobile terminal 100 for simultaneous broadcast reception or broadcast channel switching for at least two broadcast channels.

The mobile communication module 112 can transmit and receive wireless signals to and from at least one selected from a base station, an external terminal, and a server on a mobile communication network constructed according to technical standards or communication schemes for the mobile communication (e.g., Global System for Mobile communication (GSM), Code Division Multi Access (CDMA), Code Division Multi Access 2000 (CDMA 2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), and Long Term Evolution-Advanced (LTE-A) etc.).

The wireless signal can include a voice call signal, a video call signal, or various types of data according to transmission and reception of a text/multimedia message.

The wireless internet module 113 refers to a module for a wireless internet connection, and can be embedded in or prepared outside the mobile terminal 100. The wireless internet module 113 is configured to transmit and receive a wireless signal over a communication network conforming with wireless internet technologies.

The wireless internet technologies include, for example, Wireless LAN (WLAN), Wireless-Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and LTE-Advanced (LTE-A), and the wireless internet module 113 transmits and receives data according to at least one wireless internet technology within the range of including internet technology not described in the above.

From a viewpoint that an access to the wireless internet through WiBro, HSDPA, HSUPA, GSM, CDMA, WCDMA, LTE, or LTE-A is conducted through a mobile communication network, the wireless internet module 113 conducting the access to the wireless internet through the mobile communication network can be understood as a kind of the mobile communication module 112.

The short range communication module 114 is for short range communication and can support the short range communication by using at least one selected from Bluetooth™, Radio Frequency Identification (RFID), Infrared Data Association (IrDA), Ultra Wideband UWB), ZigBee, Near Field Communication (NFC), Wi-Fi, Wi-Fi Direct, and Wireless Universal Serial Bus (Wireless USB) technologies. This short range communication module 114 can support, through a wireless area network, wireless communication between the mobile communication terminal 100 and a wireless communication system, between the mobile terminal 100 and another mobile terminal 100, or between the mobile terminal 100 and a network on which the other mobile terminal 100 or an external server is located. The wireless area network can be a wireless personal area network.

Here, the other mobile terminal 100 can be a wearable device (e.g., a smart watch, a smart glass, or an HMD) through which data is mutually exchangeable (or interworkable) with the mobile terminal 100 according to an embodiment. The short range communication module 114 can detect (or recognize) a wearable device capable of communicating with the mobile terminal 100. Furthermore, if the detected wearable device is authenticated to communicate with the mobile terminal 100, the control unit 180 can transmit at least a part of data processed in the mobile terminal 100 to the wearable device through the short range communication module 114. Therefore, a user of the wearable device can use the data processed by the mobile terminal 100 through the wearable device. For example, if a call is received by the mobile terminal 100, the user can perform a phone call through the wearable device, or if a message is received by the mobile terminal 100, the user can check the received message through the wearable device.

The location information module 115 is for obtaining a location (or a current location) of the mobile terminal. As a representative example thereof, there is a global positioning system (GPS) module or a Wi-Fi module. For example, if adopting the GPS module, the mobile terminal can obtain a location of the mobile terminal by using a signal transmitted from a GPS satellite. For another example, if adopting the Wi-Fi module, the mobile terminal can obtain the location of the mobile terminal on the basis of information on a wireless access point (AP) transmitting or receiving a wireless signal with the Wi-Fi module. If necessary, the location information module 115 can additionally or alternatively perform any one function among other modules in the wireless communication unit 110 in order to obtain data about the location of the mobile terminal. The location information module 115 is a module used for obtaining the location (or current location) of the mobile terminal, and is not limited to a module directly calculating or obtaining the location of the mobile terminal.

Next, the input unit 120 is for receiving image information (or an image signal), audio information (or an audio signal), data, or information input from the user. The mobile terminal 100 can include one or a plurality of cameras 121 for an input of image information. The camera 121 processes an image frame such as a still image or video obtained by an image sensor in a video call mode or an image capturing mode. The processed image frame can be displayed on the display unit 151 or stored in the memory 170. Furthermore, the plurality of cameras 121 prepared in the mobile terminal 100 can be arranged to form a matrix structure, and, through the cameras 121 forming this matrix structure, a plurality of pieces of information on images having different angles or different focuses can be input to the mobile terminal 100. In addition, the plurality of cameras 121 can be arranged in a stereo structure to obtain left and right images for realizing a stereoscopic image.

The microphone 122 can process an external sound signal as electrical voice data. The processed voice data can be variously used according to a function (or an application program) being performed in the mobile terminal 100. Furthermore, various noise removal algorithms can be implemented for removing noise generated in a process for receiving the external sound signal.

The user input unit 123 is for receiving information from the user. If information is input through the user input unit 123, the control unit 180 can control an operation of the mobile terminal 100 in correspondence to the input information. This user input unit 123 can include a mechanical input unit (or mechanical key, for example, buttons positioned on the front and rear surfaces or on the side surfaces, a dome switch, a jog wheel, or a jog switch, etc.) and a touch type input unit. As an example, the touch type input unit can be configured with a virtual key displayed on a touch screen through a software processing, a soft key, or a visual key, or a touch key disposed on a portion other than the touch screen. In addition, the virtual key or the visual key is possibly displayed on the touch screen in various types and, for example, can be configured with graphics, texts, icons, videos, or a combination thereof.

Furthermore, the sensing unit 140 can sense at least one of environmental information surrounding the mobile terminal 100 and user information, and generate a sensing signal corresponding to the sensed information. The control unit 180 can control driving or operations of the mobile terminal 100, or perform data processing, a function, or an operation related to an application program installed in the mobile terminal 100, on the basis of the sensing signal. Hereinafter, representative sensors among various sensors that can be included in the sensing unit 140 are described in detail.

Firstly, the proximity sensor 141 refers to a sensor detecting presence of an object accessing or around a predetermined detecting surface by using an electromagnetic force or an infrared ray without a mechanical contact. This proximity sensor 141 can be disposed in an internal area of the mobile terminal surrounded by the above-described touch screen or around the touch screen.

As an example of the proximity sensor 141, there is a transmissive optoelectronic sensor, a diffuse optoelectronic sensor, a high frequency oscillating proximity sensor, a capacitive proximity sensor, an inductive proximity sensor, or an infrared proximity sensor. If the touch screen is capacitive type, the proximity sensor 141 can be configured to detect an access of an object having conductivity by a change of an electric field according to the access of the object. In this case, the touch screen (or a touch sensor) itself can be classified into a proximity sensor.

Moreover, for convenience of explanation, a behavior that an object is in proximity to the touch screen without contacting the touch screen and is allowed to be recognized as if the object is on the touch screen is referred to as a "proximity touch". A behavior that an object actually contacts the touch screen is referred to as a "contact touch". A position at which an object is subject to a proximity touch over the touch screen means a position at which the object vertically corresponds to the touch screen if the object is subject to the proximity touch. The proximity sensor 141 can detect a proximity touch and a proximity touch pattern (e.g., a proximity touch distance, a proximity touch direction, a proximity touch speed, a proximity touch time, a proximity touch position, a proximity touch shift state, etc.). Furthermore, the control unit 180 can process data (or information) corresponding to a proximity touch action and the proximity touch pattern detected through the proximity sensor 141 and, in addition, can output visual information corresponding to the processed data on the touch screen. In addition, the control unit 180 can control the mobile terminal 100 so that different operations or different data (or information) are processed according to whether a touch for an identical point on the touch screen is a proximity touch or a contact touch.

The touch sensor senses a touch (or a touch input) applied to the touch screen (or the display unit 151) by using at least one of various touch schemes including a resistive-film scheme, a capacitive scheme, an infrared ray scheme, an ultrasonic scheme, and a magnetic field scheme.

As an example, the touch sensor can be configured to convert a change in pressure applied to a specific part or a change in capacitance generated at a specific part of the touch screen into an electrical input signal. The touch sensor can be configured to detect a position or an area thereon which is touched by a touch object touching the touch screen, or pressure or capacitance at the time of the touch. Here, the touch object can be an object applying a touch on the touch sensor, for example, a finger, a touch pen, a stylus pen, or a pointer.

In this way, if there is a touch input on the touch sensor, a signal (signals) corresponding thereto is (are) transmitted to a touch controller. The touch controller processes the signal(s) and transmits corresponding data to the control unit 180. Accordingly, the control unit 180 can know which area of the display unit 151 is touched. Here, the touch controller can be a separate element other than the control unit 180, or be the control unit itself.

Furthermore, the control unit 180 can perform different controls or an identical control according to a kind of the touch object, which touches the touch screen (or a touch key prepared other than the touch screen). Whether to perform different controls or an identical control according to a kind of the touch object can be determined according to a current operation state of the mobile terminal 100 or an application program being executed.

The above-described touch sensor and proximity sensor can sense independently or in a combined manner various types of touches on the touch screen, wherein the touches include a short(or a tap) touch, a long touch, a multi-touch, a drag touch, a flick touch, a pinch-in touch, a pinch-out, a swipe touch, and a hovering touch.

The ultrasonic sensor can recognize position information on a touch object by using an ultrasonic wave. The control unit 180 is able to calculate a position of a wave generating source through information sensed by an optical sensor and a plurality of ultrasonic sensors. The position of the wave generating source can be calculated by using a property that a light is very faster than the ultrasonic wave, in other words, a time that a light arrives at an optical sensor is very shorter than a time that an ultrasound wave arrives at an ultrasonic sensor. In detail, the position of the wave generating source can be calculated by using a time difference from a time if an ultrasonic wave arrives with a light considered as a reference signal.

Furthermore, from a view of a configuration of the input unit 120, the camera 121 includes at least one selected from a camera sensor (e.g., a CCD, or a CMOS sensor), a photo sensor (or an image sensor), and a laser sensor.

The camera 121 and the laser sensor can be combined together and sense a touch of the sensing target for a 3-dimensional stereoscopic image. The photo sensor can be stacked on a display element, and this photo sensor scans a movement of the sensing target close to the touch screen. In detail, the photo sensor includes photo diodes and transistors in rows/columns and scans a target mounted on the photo sensor by using an electrical signal changed according to an amount of a light applied to the photo diodes. In other words, the photo sensor performs coordinate calculation on the sensing target according to a change amount of the light and, through this, position information on the sensing target can be obtained.

The display unit 151 displays (outputs) information processed by the mobile terminal 100. For example, the display unit 151 can display execution screen information on the application program driven in the mobile terminal 100 or user interface (UI) information or graphic user interface (GUI) information according to the execution screen information.

In addition, the display unit 151 can be configured as a stereoscopic display unit displaying a stereoscopic image.

A 3-dimensional display scheme such as a stereoscopic scheme (glasses type), an autostereoscopic scheme (glassless type), or a projection scheme (a holographic scheme) can be applied to the stereoscopic display unit.

The sound output unit 152 can output audio data received from the wireless communication unit 110 or stored in the memory 170 in a call signal reception mode, a call mode or a recording mode, a speech recognition mode, or in a broadcast reception mode. The sound output unit 152 can output a sound signal related to a function (e.g., a call signal reception sound, or a message reception sound, etc.) performed in the mobile terminal 100. This sound output unit 152 can include a receiver, a speaker, or a buzzer, etc.

The haptic module 153 can generate various tactile effects that the user can feel. A representative example of the tactile effect that is generated by the haptic module 153 can be vibration. Strength and a pattern of the vibration generated by the haptic module 153 can be controlled by user selection or setting by the control unit. For example, the haptic module 153 can output different vibrations sequentially or by synthesizing them.

Besides the vibration, the haptic module 153 can generate various tactile effects including an effect by a stimulus such as a pin array moving vertically to a contact skin surface, a air discharge force or air absorptive power through an outlet or an inlet, brush against a skin surface, contact to an electrode, or static electricity, and an effect by reproducing a cold and warmth sense by using a device that heat absorption or heating is enabled.

The haptic module 153 can be implemented to transfer the tactile effect through a direct contact, and can also be implemented for the user to feel the tactile effect through a muscle sense of a finger or an arm. The haptic module 153 can be prepared two or more in number according to a configuration aspect of the mobile terminal 100.

The optical output unit 154 can output a signal for notifying an event occurrence by using a light from an optical source of the mobile terminal 100. The event occurred in the mobile terminal 100 can be exemplified with message reception, call signal reception, missed calls, alarm, schedule notification, email reception, or information reception through an application.

The signal output by the optical output unit 154 is implemented according to that the mobile terminal emits a monochromatic light or a multi-chromatic light towards the front or rear surface. The signal output can be completed if the mobile terminal detects that the user checks the event.

The interface unit 160 can play a role of a passage with all external devices connected to the mobile terminal 100. The interface unit 160 can receive data from the external device, receive power and transfer the power to each element inside the mobile terminal 100, or allow internal data of the mobile terminal 100 to be transmitted to the external device. For example, the interface 160 can include a wired/wireless headset port, an external charger port, a wired/wireless data port, a memory card port, a port connecting a device that an identification module is prepared, an audio input/output (I/O) port, a video input/output (I/O) port, or an earphone port, etc.

Furthermore, the identification module is a chip storing various pieces of information for authenticating user's authority for the mobile terminal 100 and can include a user identify module (UIM), a subscriber identity module (SIM), or a universal subscriber identity module (USIM). A device including the identification module (hereinafter, an 'identification device') can be manufactured in a smart card type. Accordingly, the identification device can be connected to the mobile terminal 100 through the interface unit 160.

In addition, if the mobile terminal 100 is connected to an external cradle, the interface unit 160 can be a passage through which power is supplied from the cradle to the mobile terminal 100 or a passage through which various command signals input from the cradle by the user are delivered. The various command signals or the power input from the cradle can operate as signals for perceiving that the mobile terminal 100 is accurately mounted in the cradle.

The memory 170 can store a program for operations of the control unit 180 and temporarily store input/output data (e.g., a phone book, messages, still images, videos, etc.). The memory 170 can store data about vibrations of various patterns and sounds at the time of a touch input on the touch screen.

The memory 170 can include at least one storage medium type among a flash memory type, a hard disk type, a Solid State Disk (SSD) type, a Silicon Disk Drive (SDD) type, a multimedia card micro type, a card type memory (e.g., SD or XD memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disk and an optical disc. The mobile terminal 100 can operate in relation to a web storage performing a storage function of the memory 170 over the internet.

Furthermore, as described above, the controller 180 normally controls overall operations and an operation related to an application program of the mobile terminal 100. For example, if a state of the mobile terminal satisfies a set condition, the control unit 180 executes or releases a lock state that limits an input of a user's control command to applications.

In addition, the control unit 180 can perform a control or a process related to a voice call, data communication, or a video call, etc., or can perform a pattern recognition processing for recognizing a written input and a drawing input performed on the touch screen as a character and an image, respectively. Furthermore, the control 180 can combine and control any one of or a plurality of the above-described elements in order to implement various embodiments to be described below in the mobile terminal 100.

The power supply unit 190 receives external or internal power under a control of the control unit 180 and supplies power necessary for operating each element. The power supply unit 190 includes a battery. The battery can be an embedded battery that is rechargeable and can be detachably coupled for charging.

The power supply unit 190 can include a connection port, and the connection port can be configured as an example of the interface 160 to which an external charger providing power is electrically connected for charging the battery.

As another example, the power supply unit 190 can be configured to charge the battery in a wireless manner without using the connection port. In this case, the power supply unit 190 can receive, from an external wireless power transmitting device, power by using one or more of an inductive coupling manner on the basis of a magnetic induction phenomenon and a magnetic resonance coupling manner on the basis of an electromagnetic resonance phenomenon.

Hereinafter, various embodiments can be implemented in a recording medium that is readable with a computer or a similar device by using software, hardware, or a combination thereof.

Next, description is made about a communication system realizable through the mobile terminal 100 according to an embodiment.

Firstly, the communication system can use different wireless interfaces and/or a physical layer. For example, the wireless interface available by the communication system can include Frequency Division Multiple Access (FDMA), Time Division Multiple Access (TDMA), Code Division Multiple Access (CDMA), Universal Mobile Telecommunications Systems (UMTS)(in particular, Long Term Evolution (LTE), or Long Term Evolution-Advanced (LTE-A)), Global System for Mobile Communications (GSM), or etc.

Hereinafter, for convenience of explanation, description is made limitedly to CDMA. However, it is obvious that the embodiments can be applied to all communication systems including an Orthogonal Frequency Division Multiplexing (OFDM) wireless communication system as well as a CDMA wireless communication system.

The CDMA wireless communication system can include at least one terminal 100, at least one base station (BS, also can be referred to as Node B or Evolved Node B), at least one BS controller (BSC) and a mobile switching center (MSC). The MSC can be configured to be connected to the Public Switched Telephone Network (PSTN) and BSCs. The BSCs can be connected to the BS in pair through a backhaul line. The backhaul line can be prepared according to at least one selected from E1/T1, ATM, IP, PPP, Frame Relay, HDSL, ADSL, and xDSL. Accordingly, the plurality of BSCs can be included in a CDMA wireless communication system.

Each of a plurality of BSs can include at least one sector, and each sector can include an omni-directional antenna or an antenna indicating a specific radial direction from the BS. In addition, each sector can include two or more antennas having various types. Each BS can be configured to support a plurality of frequency allocations and each of the plurality of allocated frequencies can have specific spectrum (e.g., 1.25MHz, or 5MHz).

An intersection between the sector and the frequency allocation can be called as a CDMA channel. The BS can be called as a base station transceiver subsystem (BTSs). In this case, one BSC and at least one BS are called together as a "base station". The base station can also represent a "cell site". In addition, each of a plurality of sectors for a specific BS can also be called as a plurality of cell sites.

A broadcasting transmitter (BT) transmits a broadcast signal to terminals 100 operated in a system. The broadcast reception module 111 illustrated in Fig. 4 is prepared in the terminal 100 for receiving the broadcast signal transmitted by the BT.

Furthermore, in the CDMA wireless communication system, a global positioning system (GPS) can be linked for checking a location of the mobile terminal 100. A satellite is helpful for grasping the location of the mobile terminal. Useful location information can be obtained by less than two or at least two satellites. Here, the location of the mobile terminal 100 can be tracked by using all techniques, which are capable of tracking the location, as well as a GPS tracking technique. In addition, at least one of GPS satellites can be selectively or additionally responsible for transmitting satellite digital multimedia broadcasting (DMB).

The location information module 115 prepared in the mobile terminal 100 is for detecting, operating or identifying the location of the mobile terminal 100, and can representatively include a GPS module and a WiFi module. If necessary, the location information module 115 can alternatively or additionally perform any function of other modules in the wireless communication unit 110 for obtaining data for the location of the mobile terminal 100.

The GPS module 115 can precisely calculate 3D current location information according to latitude, longitude, and altitude by calculating distance information from three or more satellites and precise time information, and by applying a trigonometry to the calculated information. A method is currently widely used that calculates location and time information using three satellites, and corrects an error in the calculated location and time information using another satellite. The GPS module 115 can calculate speed information by continuously calculating a current location in real time. However, it is difficult to precisely measure the location of the mobile terminal 100 by using the GPS module in a dead zone, such as an indoor area, of the satellite signal. Accordingly, in order to compensate for location measurement in the GPS manner, a WiFi positioning system (WPS) can be used.

The WPS is a technique for tracking the location of the mobile terminal 100 using a WiFi module prepared in the mobile terminal 100 and a wireless access point (AP) transmitting or receiving a wireless signal to or from the WiFi module, and can mean a location measurement technique based on a wireless local area network (WLAN) using WiFi.

The WPS can include a WiFi positioning server, the mobile terminal 100, a wireless AP connected to the mobile terminal 100, and a database storing arbitrary wireless AP information.

The mobile terminal 100 connected to the wireless AP can transmit a location information request message to the WiFi positioning server.

The WiFi positioning server extracts information on the wireless AP connected to the mobile terminal 100 on the basis of the location information request message (or a signal) of the mobile terminal 100. The information on the wireless AP connected to the mobile terminal 100 can be transmitted to the WiFi positioning server through the mobile terminal 100 or transmitted to the WiFi positioning server from the wireless AP.

The information on the wireless AP, which is extracted on the basis of the location information request message of the mobile terminal 100, can be at least one selected from a MAC address, a Service Set Identification (SSID), a Received Signal Strength Indicator (RSSI), Reference Signal Received Power (RSRP), Reference Signal Received Quality (RSRQ), channel information, Privacy, a Network Type, Signal Strength, and Noise Strength.

As described above, the WiFi positioning server can receive information on the wireless AP connected to the mobile terminal 100, and extract wireless AP information corresponding to the wireless AP to which the mobile terminal is being connected from the pre-constructed database. At this point, information on arbitrary wireless APs, which is stored in the database, can be information on a MAC Address, an SSID, channel information, Privacy, a Network Type, latitudinal and longitudinal coordinates of a wireless AP, a building name and floor on which the wireless AP is located, indoor detailed location information (GPS coordinates available), an address of an owner of the wireless AP, a phone number, and etc. At this point, in order to remove a wireless AP provided by using a mobile AP or an illegal MAC address in the location measurement process, the WiFi positioning server can extract a predetermined number of pieces of wireless AP information in the descending order of an RSSI.

Thereafter, the WiFi positioning server can extract (or analyze) location information on the mobile terminal 100 by using at least one piece of wireless AP information extracted from the database. The location information of the mobile terminal 100 is extracted (or analyzed) by comparing the stored and the received wireless AP information.

As a method of extracting (or analyzing) location information on the mobile terminal 100, a cell-ID method, a fingerprint method, a trigonometry, and a landmark method can be used.

The cell-ID method is a method of determining a location of a wireless AP having strongest strength from among surrounding wireless AP information collected by a mobile terminal. This method is advantageous in that implementation is simple, an additional cost is not necessary, and location information can be rapidly obtained. However, if installation intensity of a wireless AP is lower, positioning precision becomes lowered.

The fingerprint method is a method of selecting a reference location in a service area, collecting signal strength information, and estimating a location through signal strength information transmitted from a mobile terminal on the basis of the collected information. In order to use the fingerprint method, it is necessary to construct a database for propagation characteristics in advance.

The trigonometry is a method of operating a location of a mobile terminal on the basis of a distance between coordinates of at least three wireless APs and the mobile terminal. For estimating the distances between the mobile terminal and the wireless APs, signal strength is converted into distance information, or a time of arrival (ToA) of a wireless signal, a time difference of arrival (TDoA) of a wireless signal, an angle of arrival (AoA) of a wireless signal can be used.

The landmark method is a method of measuring a location of a mobile terminal by using a landmark transmitter.

Besides the above-described methods, various algorithms can be used for extracting (or analyzing) location information on a mobile terminal.

The location information on the mobile terminal 100 extracted in this way can be transmitted to the mobile terminal 100 through the WiFi positioning server and the mobile terminal 100 can obtain the location information.

The mobile terminal 100 can obtain location information by being connected to at least one wireless AP. At this point, the number of wireless APs requested for obtaining the location information on the mobile terminal 100 can be variously varied according to a wireless communication environment in which the mobile terminal 100 is located.

Various embodiments of a method for operating the flexible display device 200 will be described. The embodiments can be applied to both the stretchable display device 200_1 described above with reference to Figs. 2A and 2B and the rollable display device 200_2 described above with reference to Figs. 3A to 3F. Furthermore, the embodiments described below are also applicable to a display device having a fixed screen size of a display unit.

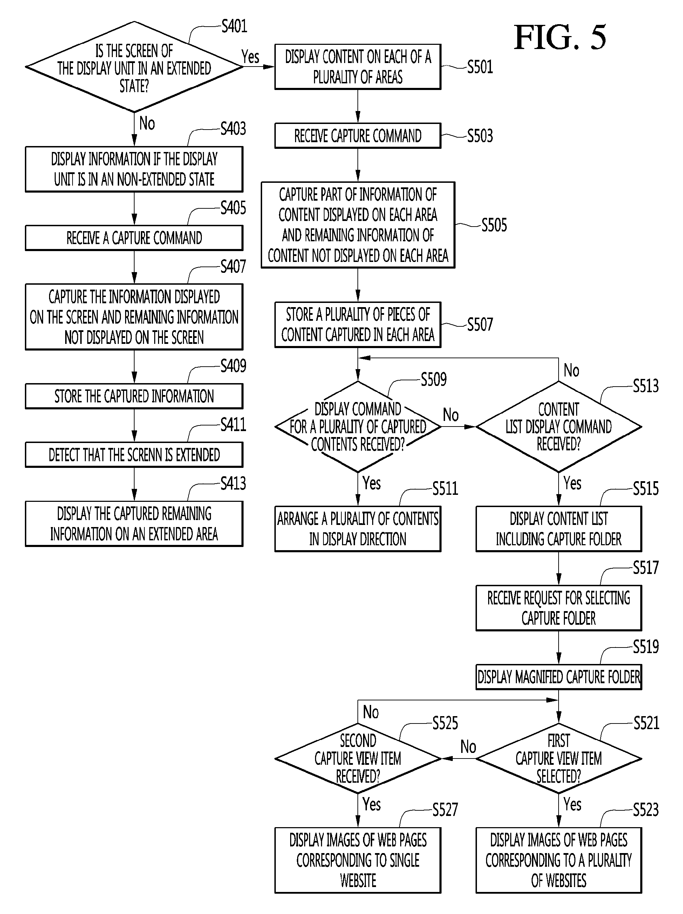

Fig. 5 is a flowchart illustrating a method for operating a flexible display device according to an embodiment.

The control unit 290 of the flexible display device 200 checks whether the screen of the display unit 250 is in an extended state (S401).

The control unit 290 displays information on the screen of the display unit 250 if the screen of the display unit 250 is not in the extended state(non-extended state) (S403).

The control unit 290 receives a capture command while the information is displayed (S405), and captures the information displayed on the screen and remaining information not displayed on the screen according to the received capture command (S407).

The control unit 290 captures a rendered portion of information that is being displayed on the screen in an non-extension state. The control unit 290 captures a residual portion of the information that is not being displayed on the screen in the non-non-extension state.

The control unit 290 stores the captured information in the storage unit 270 (S409). In one embodiment, the control unit 290 can generate respective images of the information displayed on the screen and the remaining information not displayed on the screen, and can store the generated images in the storage unit 270.

The control unit 290 detects that the screen is extended (S411), and displays the captured remaining information on an extended area of the screen (S413). In one embodiment, the control unit 290 can display, on the extended area, the image corresponding to the captured remaining information. For example, if the capture command is received and the screen is extended while the information which was displayed on the screen before the extension is displayed, the control unit 290 can display, on the extended area, the image corresponding to the remaining information. This operation will be described later.

Meanwhile, if the screen of the display unit 250 is in the extended state, the control unit 290 displays content on each of a plurality of areas (S501). In one embodiment, the plurality of areas can respectively correspond to split screens obtained by dividing the entire screen of the display unit 250 by a certain size. Each of the plurality of areas can be a display area for displaying information.

In one embodiment, if the flexible display device 200 is the rollable display device 200_2 described above with reference to Figs. 3A to 3F, each of the plurality of areas can represent an extended area of the display unit 250.

In one embodiment, the content can be a web page corresponding to a website. For example, a plurality of web pages corresponding to one website can be respectively displayed on the plurality of areas. For another example, a plurality of web pages respectively corresponding to a plurality of websites can be respectively displayed on the plurality of areas.

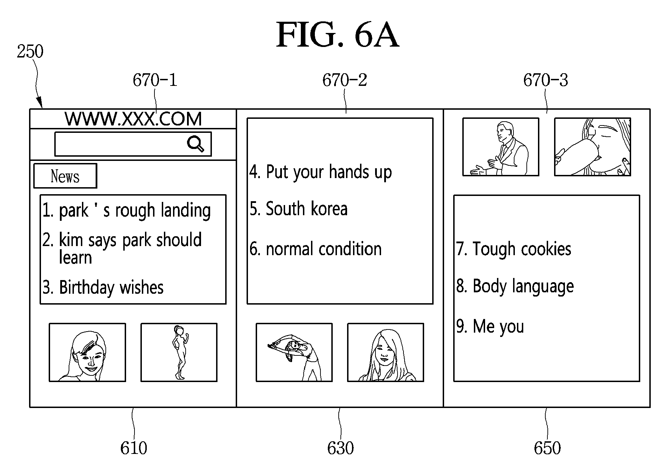

It is assumed that the content is a web page in the embodiments described below, but this is merely an example, and the content can be multimedia content such as an image, a text document, or the like. Operation S501 is described below with reference to Figs. 6A to 6D.

Figs. 6A to 6D are diagrams illustrating examples in which content is displayed on each of a plurality of areas according to an embodiment.

In particular, Fig. 6A is a diagram illustrating an example in which a plurality of web pages provided from a single website are respectively displayed on the plurality of areas, and

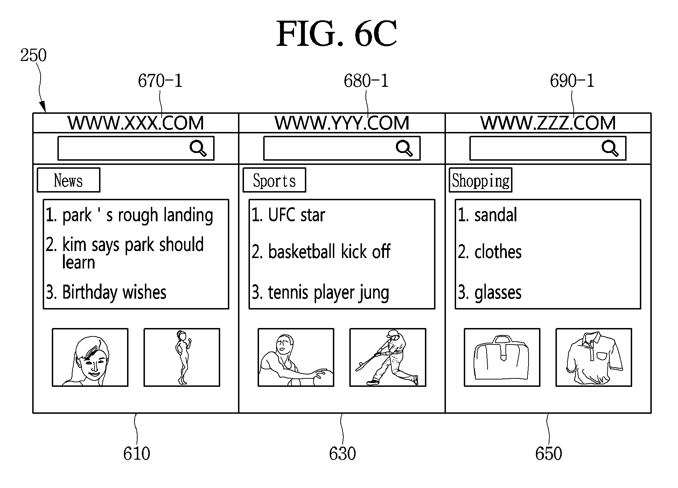

Fig. 6C is a diagram illustrating an example in which a plurality of web pages respectively provided from a plurality of websites are respectively displayed on the plurality of areas.

Referring to Figs. 6A and 6C, a screen displayed by the display unit 250 can be divided into a plurality of areas 610, 630, and 650. The plurality of areas 610, 630, and 650 can have the same size. The plurality of areas 610, 630, and 650 can be equal in horizontal and vertical lengths.. Each area can be controlled like one screen. For example, if the horizontal length of each area is equal to or larger than a preset length, each area can be controlled like one screen.

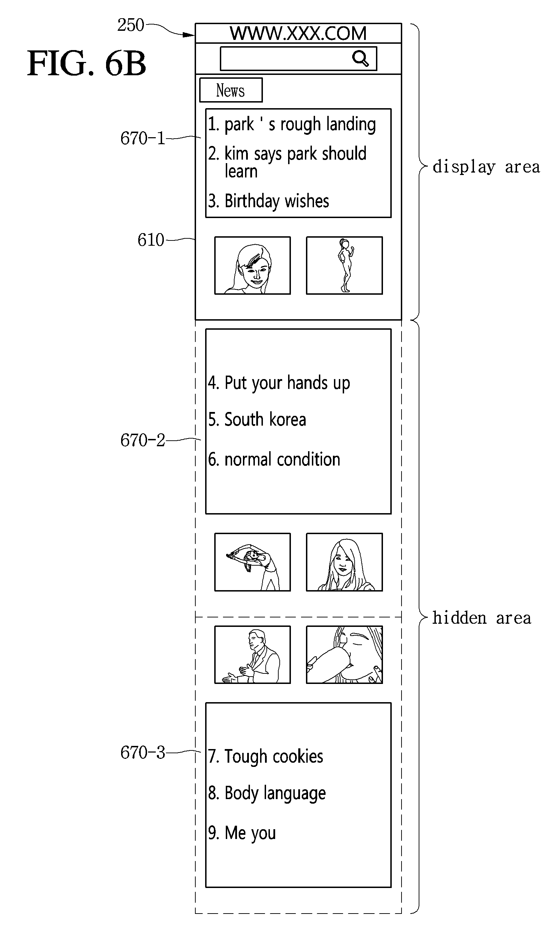

Referring to Fig. 6A, a web page 670-1 provided from the website "www.xxx.com" can be displayed on the first area 610, a web page 670-2 provided from the same website can be displayed on the second area 630, and a web page 670-3 provided from the same website can be displayed on the third area 650. The web pages 670-2 and 670-3 can include information continued from information displayed on the web page 670-1. That is, due to a size limitation of the first area 610, only the web page 670-1 provided from the website can be displayed on the first area 610, and the web pages 670-2 and 670-3 may not be displayed thereon. In detail, referring to Fig. 6B, all web pages provided from a specific screen of the website "www.xxx.com" can include the web pages 670-1 to 670-3. The web page 670-2 can include information continued from the information displayed on the web page 670-1, and the web page 670-3 can include information continued from the information displayed on the web page 670-2.

In Fig. 6B, provided that a screen displayed by the display unit 250 has a size of the first area 610, the web page 670-1 alone can be displayed on the first area 610 due to the size limitation of the first area 670-1. Only a part of information can be displayed on the first area 670-1. That is, the web pages 670-2 and 670-3 may not be displayed on the screen of the display unit 250. The web pages 670-2 and 670-3 can be positioned on a type of hidden area. A user can view the web pages 670-2 and 670-3 by moving a scrollbar downwards. Referring back to Fig. 6A, if the display unit 250 is a flexible display, the display unit 250 can be extended by as much as the second area 630 and the third area 650, and the web pages 670-2 and 670-3 which were positioned in a hidden area can be displayed on the second area 630 and the third area 650 respectively.

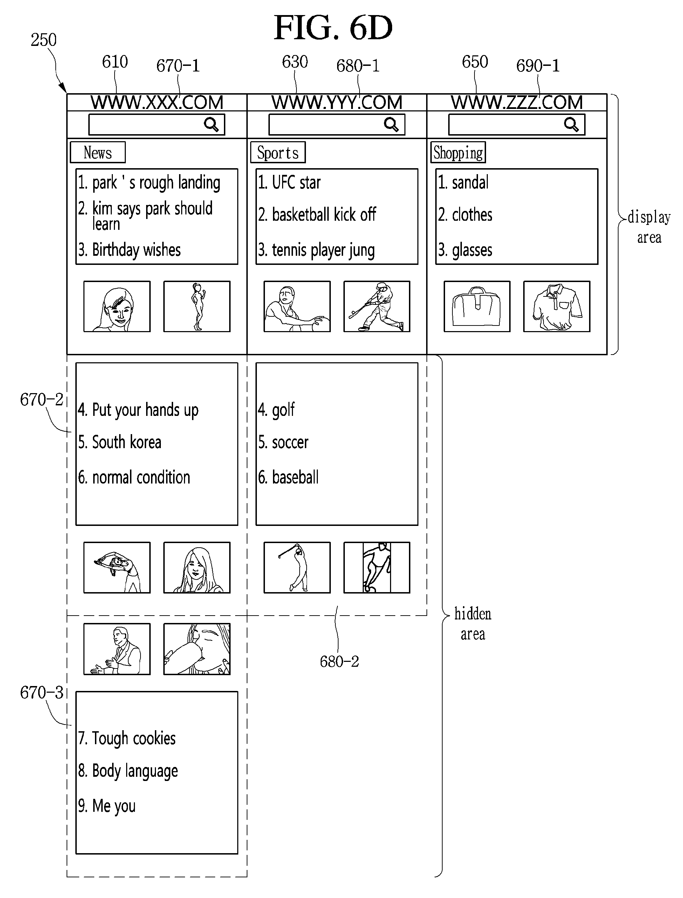

Next, Figs. 6C and 6D are described.

Referring to Fig. 6C, web pages provided from different websites can be respectively displayed on the plurality of areas 610, 630, and 650. The web page 670-1 provided from the first website "www.xxx.com" can be displayed on the first area 610, a web page 680-1 provided from a second website "www.yyy.com" can be displayed on the second area 630, and a web page 690-1 provided from a third website "www.zzz.com" can be displayed on the third area 650.

Each of the plurality of areas 610, 630, and 650 can be unable to display entire information provided from a specific screen of each website due to size limitation. That is, referring to Fig. 6D, the entire information provided from a specific screen of the first website can include the web pages 670-1 to 670-3. The web page 670-2 can include information continued from the information displayed on the web page 670-1, and the web page 670-3 can include information continued from the information displayed on the web page 670-2. Due to the size limitation of the first area 610, only the web page 670-1 can be displayed on the first area 610, and the other web pages 670-2 and 670-3 may not be displayed thereon.

Likewise, the entire information provided from a specific screen of the second website can include web pages 680-1 and 680-2. The web page 680-2 can include information continued from information displayed on the web page 680-1. Due to the size limitation of the second area 630, only the web page 680-1 can be displayed on the second area 630, and the other web page 680 may not be displayed thereon. The user may check information positioned in a hidden area of a bottom of each area, using a scrollbar displayed on each area.

The entire information provided from a specific screen of the third website can include the web page 690-1 alone, and can be displayed on the third area 650.

The method of Fig. 5 continues to be described below referring back to Fig. 5.

The control unit 290 receives the capture command while content is displayed on each of the plurality of areas (S503), and captures a part of information of the content displayed on each area and the remaining information of the content not displayed on each area according to the received capture command (S505). In one embodiment, the capture command can represent a command for capturing both the part of the information of the content displayed on each area and the remaining information of the content not displayed on each area. If there is no remaining information of the content not displayed on each area, only the information displayed on each area can be captured. The capture command can represent a command for displaying information which is currently being displayed on the screen and information which is not currently displayed on the screen but can be displayed using a scrollbar.

In one embodiment, the capture command can be received through a capture button (not shown) provided to one side of the display unit 250. In the flexible display device 200_2, the capture button can be provided on the second holder 224.

In another embodiment, the capture command can be received through a preset touch input to the screen of the display unit 250.

In one embodiment, the control unit 290 can generate one image of information displayed on each area and another image of information not displayed on each area according to the capture command. That is, the control unit 290 can generate an image on the basis of each area according to the capture command. This operation will be described with reference to Figs. 6A to 6D.

If the capture command is received in the state of Fig. 6A, the control unit 290 can capture information of each area to generate a captured image for each area. That is, according to the capture command, the control unit 290 can generate an image corresponding to the web page 670-1 by capturing the web page 670-1 displayed on the first area 610, can generate an image corresponding to the web page 670-2 by capturing the web page 670-2 displayed on the second area 630, and can generate an image corresponding to the web page 670-3 by capturing the web page 670-3 displayed on the third area 650.

If the capture command is received in the state of Fig. 6B, the control unit 290 can generate an image corresponding to the web page 670-1 by capturing the web page 670-1 displayed on the screen of the display unit 250, can generate an image corresponding to the web page 670-2 by capturing the web page 670-2 not displayed on the screen of the display unit 250, and can generate an image corresponding to the web page 670-3 by capturing the web page 670-3 not displayed on the screen of the display unit 250.

If the capture command is received in the states of Figs. 6C and 6D, the control unit 290 can generate images respectively corresponding to the web pages 670-1, 680-1, and 690-1 by capturing the web pages 670-1, 680-1, and 690-1. At the same time, the control unit 290 can generate images respectively corresponding to the web pages 670-2, 670-3, and 680-2 by capturing the web pages 670-2, 670-3, and 680-2 not displayed on the screen of the display unit 250.

Meanwhile, the control unit 290 can capture a part of information of content and the remaining information of the content on the basis of a size of each area, and can store an image corresponding to the captured part of the information of the content and an image corresponding to the captured remaining information of the content. Accordingly, the captured images can have the same size.

The method of Fig. 5 continues to be described below referring back to Fig. 5.

The control unit 290 stores, via the storage unit 270, a plurality of contentss captured in each area (S507). That is, the control unit 290 can generate an image of information of content captured in each area, and can store the generated image via the storage unit 270.

If a display command for displaying a plurality of captured contents is received (S509), the control unit 290 arranges the plurality of contents on the basis of a display direction (S511). In one embodiment, the display command for displaying the plurality of captured contents can be an execution command of a gallery application installed in the flexible display device 200. The gallery application can represent an application for providing pictures shot by a user, pictures or videos shared with another person, and images captured in response to the capture command. As the control unit 290 receives the display command, the control unit 290 can execute the gallery application and, at the same time, can arrange and display the plurality of captured contents on the basis of the display direction.

In one embodiment, the display direction can include a horizontal view direction and a vertical view direction. For example, the horizontal view direction can represent a direction in which the display unit 250 is disposed so that a horizontal length of the display unit 250 is larger than a vertical length thereof if viewed from the user. The vertical view direction can represent a direction in which the display unit 250 is disposed so that the vertical length of the display unit 250 is larger than the horizontal direction thereof if viewed from the user.

The control unit 290 can detect whether the display unit 250 is disposed in the horizontal view direction or the vertical view direction using the magnetic sensor provided to the sensing unit 140 of Fig. 4.

An embodiment in which a plurality of captured contents are arranged according to the display direction is described below with reference to the following figures.

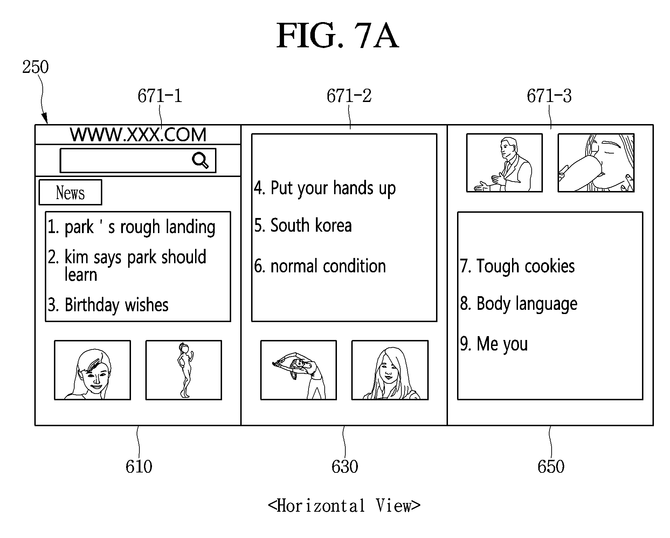

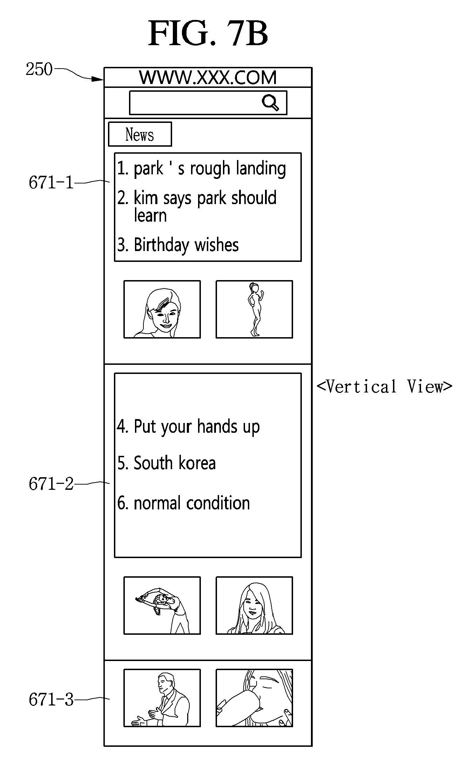

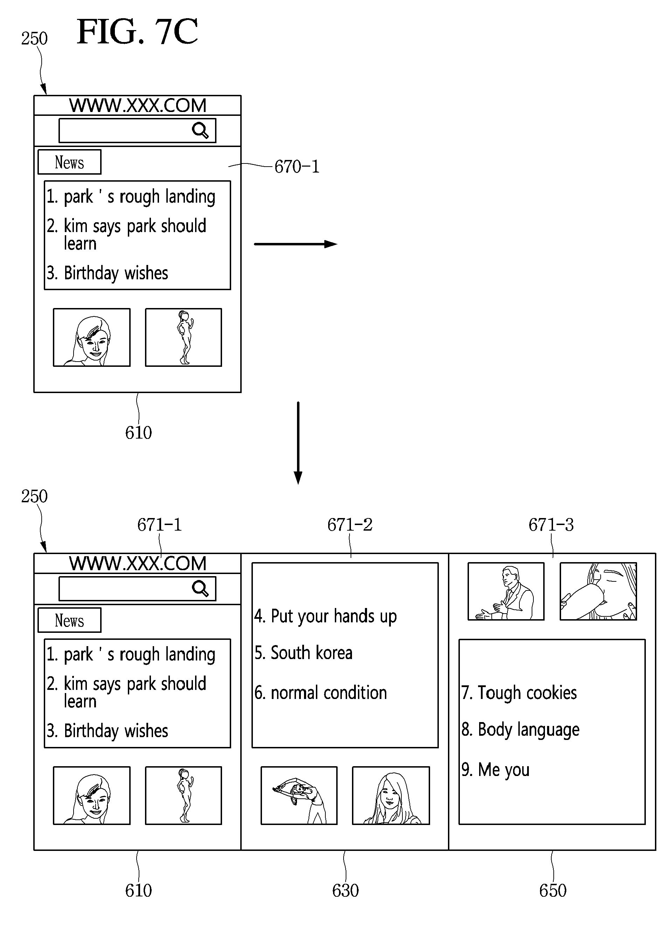

Figs. 7A and 7B are diagrams illustrating an example in which, if web pages provided from a single website are captured, the captured web pages are arranged in a display direction according to an embodiment, and Fig. 7C is a diagram illustrating an example in which, if a screen is extended, captured information is displayed on an extended area of the screen according to an embodiment.

Figs. 7A and 7B will be described.

Fig. 7A illustrates that the display unit 250 is disposed in the horizontal view direction, and Fig. 7B illustrates that the display unit 250 is disposed in the vertical view direction.

The control unit 290 can control the display unit 250 according to the display command for displaying a plurality of captured contents so that a plurality of captured images 671-1 to 671-3 are respectively displayed on the plurality of areas 610, 630, and 650 as illustrated in Fig. 7A. The plurality of images 671-1 to 671-3 can represent images captured according to the capture command in the state of Fig. 6A. That is, the image 671-1 is a captured image of the web page 670-1 of Fig. 6A, the image 671-2 is a captured image of the web page 670-2, and the image 671-3 is a captured image of the web page 670-3. If the display unit 250 is disposed in the horizontal view direction, the control unit 290 can arrange the plurality of captured images 671-1 to 671-3 in the horizontal direction (from left to right). Next, Fig. 7B is described.

If the display unit 250 is disposed in the vertical view direction, the control unit 290 can automatically arrange the plurality of captured images 671-1 to 671-3 in the vertical direction (from top to bottom) according to the display command for displaying a plurality of captured contents. That is, the captured images 671-1 to 671-3 arranged if the display unit 250 was disposed in the horizontal view direction can be arranged in the vertical direction (from top to bottom) if the display command is received while the display unit 250 is disposed in the vertical view direction.

Even if a display environment at the time of capturing information is different from that at the time of viewing the captured information, the user can conveniently view the captured information according to a current display environment.

Next, Fig. 7C is described.

It is assumed that the screen of the display unit 250 of Fig. 7C is in a state prior to extension. The web page 670-1 is displayed on the screen of the state prior to extension. In this state, the control unit 290 can receive the capture command, and can capture the web page 670-1 and the web pages 670-2 and 670-3 not displayed on the screen according to the received capture command. That is, the control unit 290 can capture the remaining information not displayed on the screen. This operation is performed in the same manner as described above with reference to Fig. 6B.

If extension of the screen of the display unit 250 is detected, the control unit 290 can display the image 671-2 corresponding to the captured web page 670-2 on the extended area 630. If the screen of the display unit 250 is additionally extended, the control unit 290 can display the image 671-3 corresponding to the captured web page 670-3 on the extended area 650. Fig. 7C illustrates that the captured image 671-1 corresponding to the web page 670-1 is displayed on the area 610, but an embodiment is not limited thereto, and the web page 670-1 itself can be displayed.

The user can easily view captured information on an extended screen using a function of capturing an entire page.

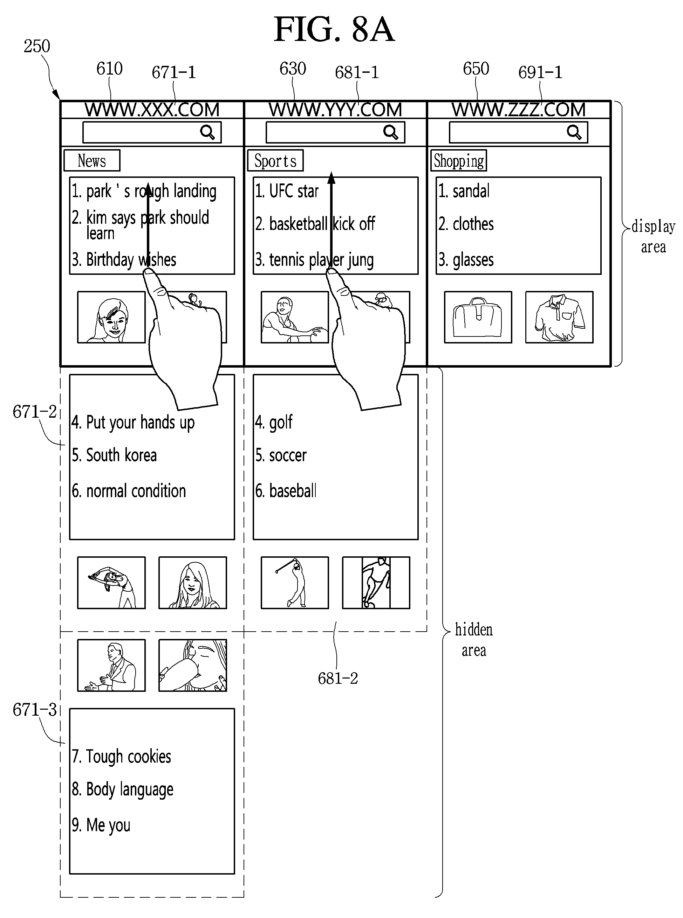

Next, Figs. 8A to 8C are described.

Figs. 8A to 8C are diagrams illustrating an example in which, if web pages respectively provided from a plurality of websites are captured, the captured web pages are arranged in the display direction according to an embodiment.

With respect to Figs. 8A to 8C, it is assumed that images corresponding to web pages captured according to the capture command in the state of Fig. 6D are used.

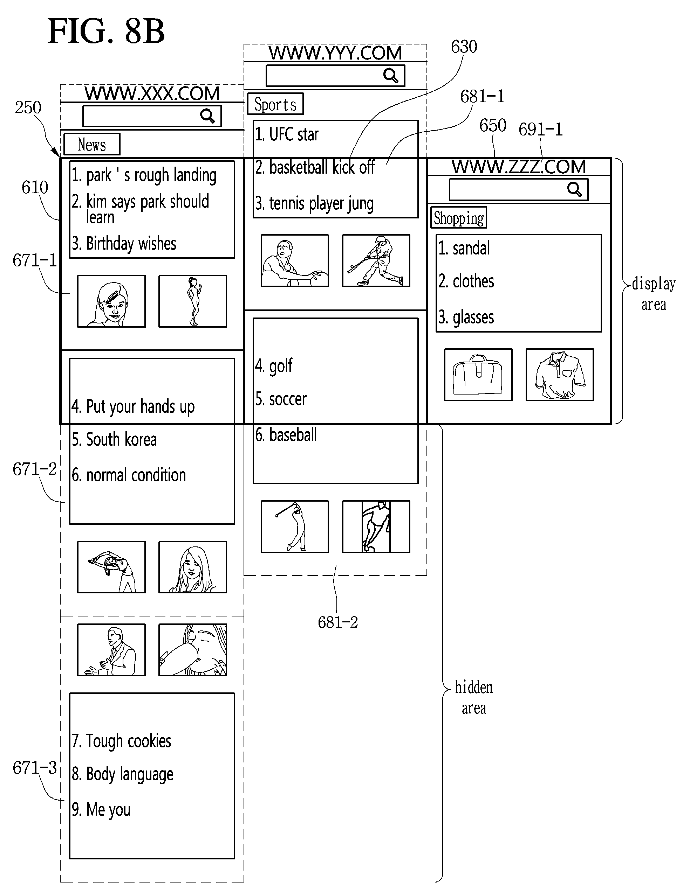

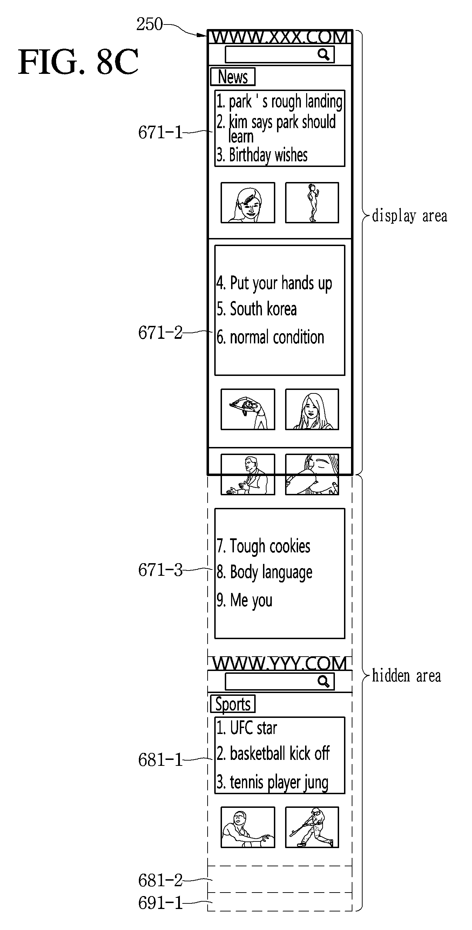

Figs. 8A and 8B illustrate that the display unit 250 is disposed in the horizontal view direction, and Fig. 8C illustrates that the display unit 250 is disposed in the vertical view direction.

The control unit 290 can control the display unit 250 according to the display command for displaying a plurality of captured contents so that the image 671-1 corresponding to the website 670-1 of Fig. 6D, an image 681-1 corresponding to the website 680-1, and an image 691-1 corresponding to the website 690-1 are respectively displayed on the plurality of areas 610, 630, and 650 as illustrated in Fig. 8A. The control unit 290 can detect that the display unit 250 is disposed in the horizontal view direction, and can sequentially arrange the plurality of captured images 671-1, 681-1, and 691-1 along the horizontal direction. Meanwhile, the image 671-2 corresponding to the web page 670-2 of Fig. 6D, the image corresponding to the web page 670-3, and an image 681-2 corresponding to the web page 680-2 may not be displayed on the screen of the display unit 250. That is, the images 671-2, 671-3, and 681-2 can be positioned in a hidden area. If an input of upwardly flicking the image 671-1 positioned on the first area 610 is received, the control unit 290 can upwardly move the images 671-1 to 671-3 corresponding to the first website. That is, each area can be individually controlled. If a specific area receives an input, the control unit 290 can control the specific area alone in response to the received input. The control unit 290 can only display a part of the image 671-1 according to the input of upwardly flicking the image 671-1, and can display, on the first area 610, a part of the image 671-2 which was not displayed.

Likewise, if an input of upwardly flicking the image 681-1 positioned on the second area 630 is received in Fig. 8A, the control unit 290 can upwardly move each of the images 681-1 and 681-2 corresponding to the second website. Accordingly, only a part of the image 681-1 can be displayed on the second area 630, and a part of the image 681-2 which was not displayed can be displayed on the second area 630.

Next, Fig. 8C is described.

The control unit 290 can detect that the display unit 250 is disposed in the vertical view direction, and can sequentially arrange the plurality of captured images 671-1 to 671-3, 681-1, 681-2, and 691-1 along the vertical direction. In detail, the control unit 290 can sequentially arrange the captured images 670-1 to 670-3 respectively corresponding to the web pages 670-1 to 670-3 provided from the first website from top to bottom. The captured images 681-1 and 681-2 respectively corresponding to the web pages 680-1 and 680-2 provided from the second website can follow the image 670-3. The captured image 691-1 corresponding to the web page 690-1 provided from the third website can follow the image 681-2.

According to an embodiment, even if captured images of web pages are stored in a horizontal view environment, the captured images can be viewed conveniently and sequentially at one view. If the user desires to view an image not displayed on the screen of the display unit 250, the user can view the image positioned in a hidden area using a flicking input.

The method of Fig. 5 continues to be described below referring back to Fig. 5.

Meanwhile, if not a display command for displaying a plurality of captured contents but a display command for displaying a content list is received (S513), the control unit 290 displays a content list including a capture folder (S515). In one embodiment, the display command for displaying a content list can represent a command for displaying captured images stored in the storage unit 270.

In another embodiment, the content list can include a capture folder. The capture folder can represent a folder for providing images corresponding to web pages captured in operations S501 to S507.

The capture folder can represent a folder for providing, at one time, captured images of web pages respectively corresponding to a plurality of websites or providing captured images of web pages corresponding to a single website.

The control unit 290 displays a magnified capture folder in response to a request for selecting the capture folder (S519). In one embodiment, the capture folder can include a first capture view item and a second capture view item. The first capture view item can represent an item for providing, at one time, captured images of web pages corresponding to a plurality of websites. The second capture view item can represent an item for providing captured images of web pages corresponding to a single website.

If a request for selecting the first capture view item from the capture folder is received (S521), the control unit 290 respectively displays, on a plurality of areas, images of web pages corresponding to a plurality of websites (S523).

If a request for selecting the second capture view item from the capture folder is received (S525), the control unit 290 respectively displays, on a plurality of areas, images of web pages corresponding to a single website (S527).

Operations S513 to S527 are described below with reference to the following figures.

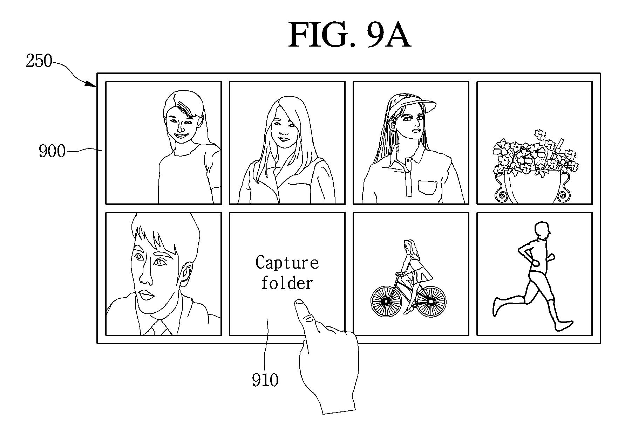

Figs. 9A to 9D are diagrams illustrating a process of providing captured images using the capture folder according to an embodiment.

As the control unit 290 receives the content list display command, the control unit 290 can display a content list 900 including a plurality of captured images and a capture folder 910 as illustrated in Fig. 9A. The capture folder 910 can be a folder for providing captured images described above with respect to operations S501 to S507.

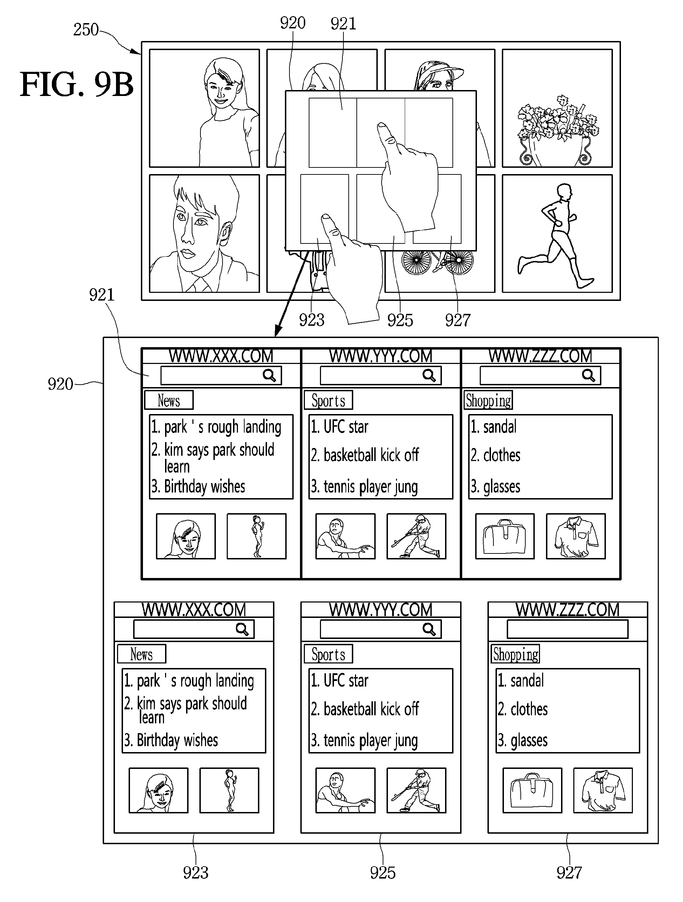

If a request for selecting the capture folder is received, the control unit 290 can control the display unit 250 so that a magnified capture folder 920 is displayed as illustrated in Fig. 9B. A first capture view item 921 and a plurality of second capture view items 923, 925, and 927 can be displayed on the magnified capture folder 920.

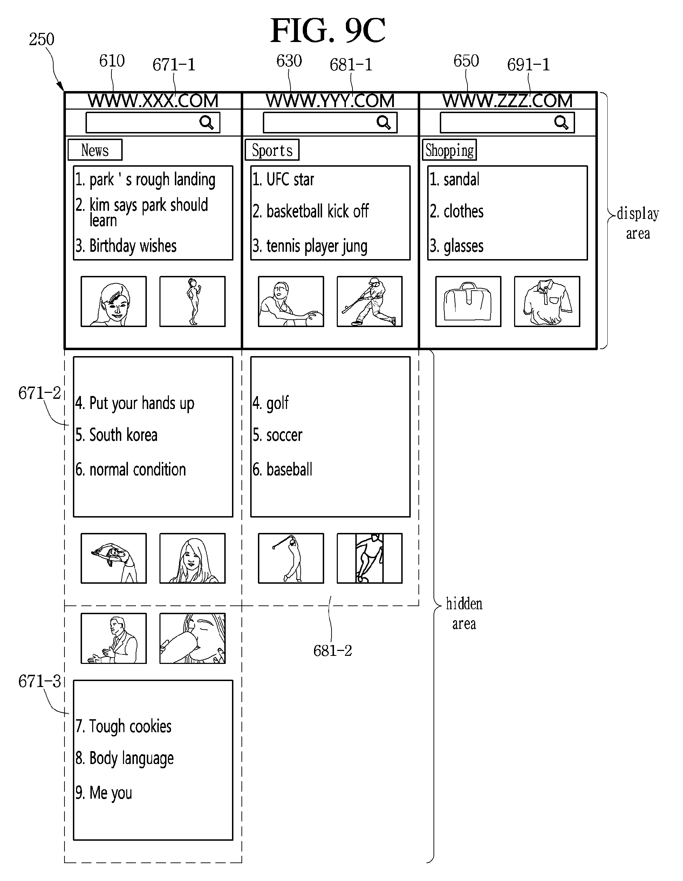

The first capture view item 921 can represent an item for providing captured images of web pages corresponding to a plurality of websites. The first capture view item 921 can include information displayed at the time of receiving the capture command. If a request for selecting the first capture view item 921 is received, the control unit 290 can display the captured image 671-1 of a web page corresponding to the first website on the first area 610, can display the captured image 681-1 of a web page corresponding to the second website on the second area 630, and can display the captured image 691-1 of a web page corresponding to the third website on the third area 650, as illustrated in Fig. 9C. That is, the control unit 290 can display, at one time, captured images of web pages corresponding to a plurality of websites in response to the request for selecting the first capture view item 921.

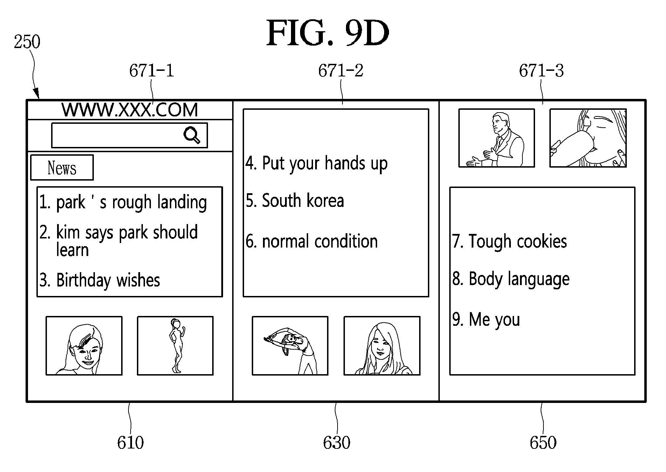

Each second capture view item can represent an item for providing captured images of web pages corresponding to a single website. Each second capture view item can indicate a captured website displayed at the time of receiving the capture command. If a request for selecting the second capture view item 923 is received, the control unit 290 can respectively display, on the plurality of areas 610, 630, and 650, the captured images 671-1 to 671-3 of web pages corresponding to one website as illustrated in Fig. 9D.

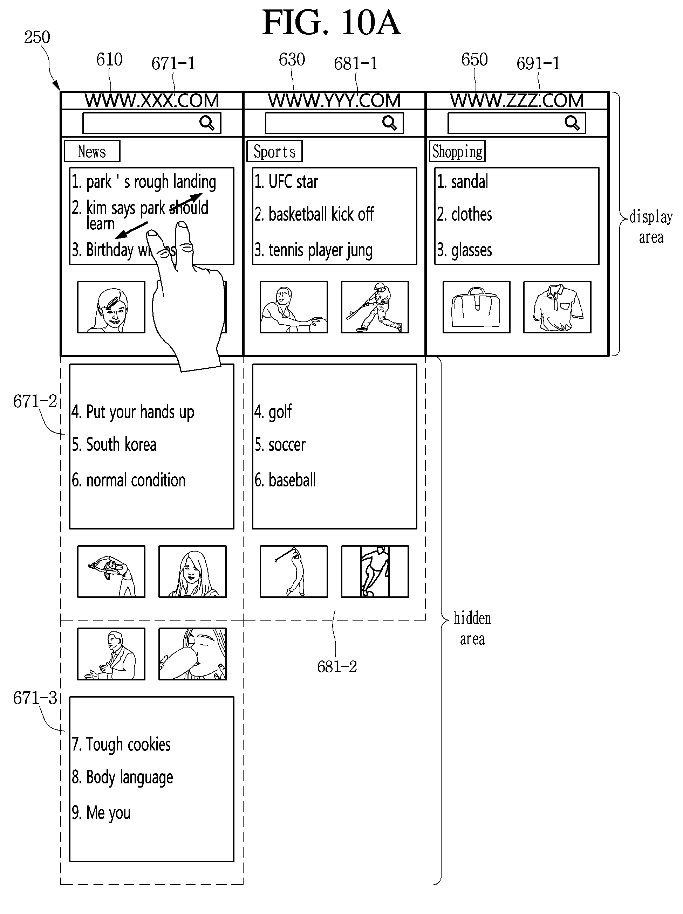

According to another embodiment, while captured images of web pages corresponding to a plurality of websites are displayed, captured images of web pages corresponding to a single website can be displayed according to a specific command. Likewise, while captured images of web pages corresponding to a single website are displayed, captured images of web pages corresponding to a plurality of websites can be displayed according to a specific command. This operation will be described with reference to Figs. 10A to 10D.

Figs. 10A to 10D are diagrams illustrating a method of display switching between captured images corresponding to a plurality of websites and captured images corresponding to a single website according to an embodiment.

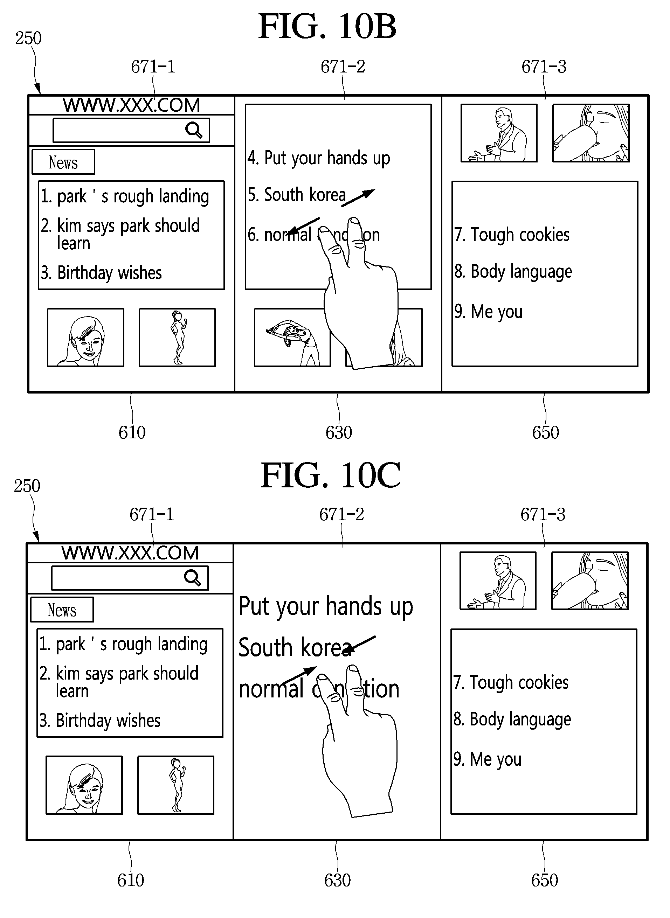

Regarding Fig. 10A, descriptions which overlap with those of Fig. 6D are not provided below. In Fig. 10A, the display unit 250 respectively displays, on the plurality of areas 610, 630, and 650, the captured images 671-1, 681-1, and 691-1 respectively corresponding to different websites. If a pinch-out input is input, through a multi-touch, to the captured image 671-1 displayed on the first area 610, the control unit 290 can move the captured image 671-2 corresponding to the first website, which was not displayed, to the second area 630, and can move the captured image 671-3 corresponding to the first website to the third area 650, as illustrated in Fig. 10B. That is, the control unit 290 can switch the captured image 681-1 corresponding to the second website to the captured image 671-2 corresponding to the first website, and can switch the captured image 691-1 corresponding to the third website to the captured image 671-3 corresponding to the first website.

The user can connectively view captured images corresponding to a single website with ease using the pinch-out input.

Meanwhile, if the pinch-out input is input, through a multi-touch, to the captured image 671-2 displayed on the second area 630 of Fig. 10B, the control unit 290 can magnify and display only the captured image 671-2 displayed on the second area 630 as illustrated in Fig. 10C.

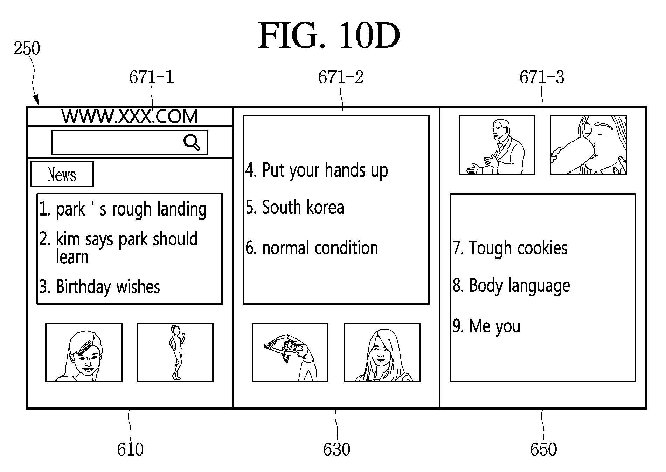

Meanwhile, if a pinch-in input is input, through a multi-touch, to the captured image 671-2 displayed on the second area 630 as illustrated in Fig. 10D, the control unit 290 can respectively display, on the plurality of areas 610, 630, and 650, the captured images 671-1, 681-1, and 691-1 corresponding to a plurality of websites as illustrated in Fig. 10A.

According to another embodiment, contents or captured images displayed on the display unit 250 can be moved according to a roll-in command or a roll-out command. In one embodiment, the roll-in command can represent a command for reducing the screen of the display unit 250, and the roll-out command can represent a command for extending the screen of the display unit 250.

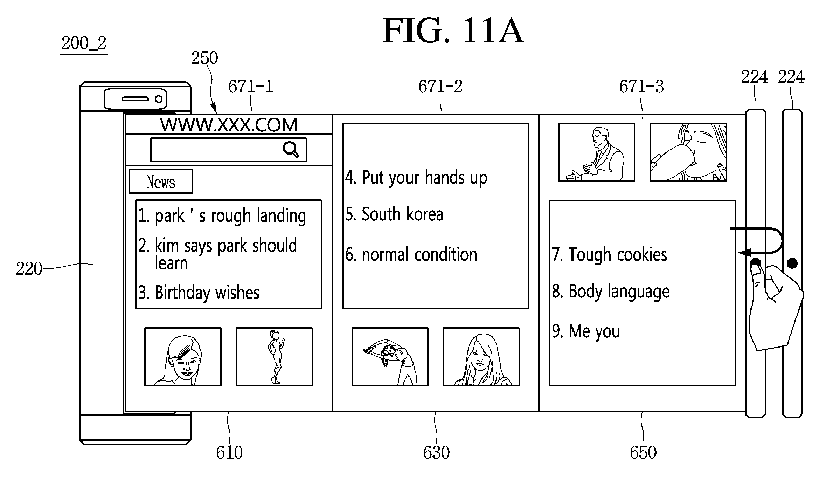

Figs. 11A to 11H are diagrams illustrating an embodiment in which captured images displayed on the display unit are moved according to the roll-in command or the roll-out command.

Figs. 11A to 11H illustrate an example of moving captured images, but an embodiment is not limited thereto and is also applicable to the case where contents not captured are moved.

With respect to Figs. 11A to 11D, it is assumed that the display unit 250 is a flexible display unit included in the rollable display device 200_2. Referring to Fig. 11A, the display unit 250 of the rollable display device 200_2 displays the plurality of captured images 671-1 to 671-3 on the plurality of extended areas 610, 630, and 650 respectively. The plurality of captured images 671-1 to 671-3 can correspond to web pages provided from the first website. The captured images 671-1 to 671-3 and a captured image 671-4 not displayed can be sequentially connected to each other to form one entire page. The captured image 671-4 can represent an image corresponding to a web page following the captured image 671-3.

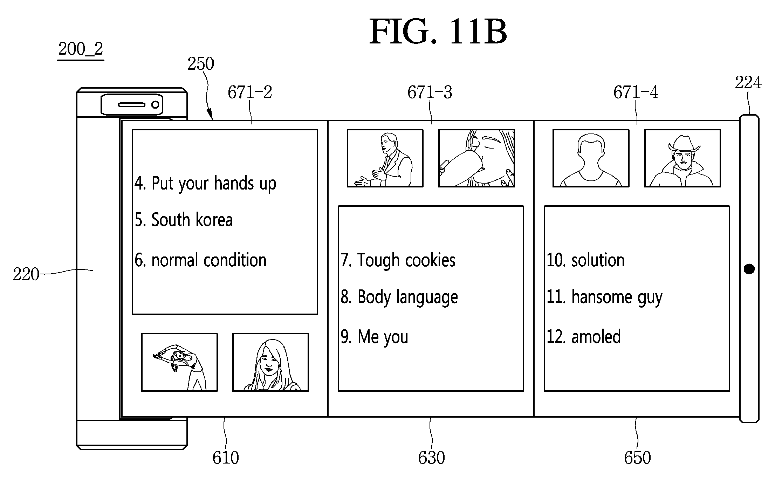

In this state, if a page moving command for moving (or rolling out) the second holder 224 provided to the end portion of the other side of the display unit 250 in a first direction and then moving (or rolling in) the second holder 224 in a second direction opposite to the first direction, the control unit 290 can leftwards move each captured image by one area as illustrated in Fig. 11B. That is, as the control unit 290 receives the page moving command, the control unit 290 can make the captured image 671-1 disappear, can display the captured images 671-2 and 671-3 on the first and second areas 610 and 630 respectively, and can display, on the third area 650, the captured image 671-4 which was not displayed.

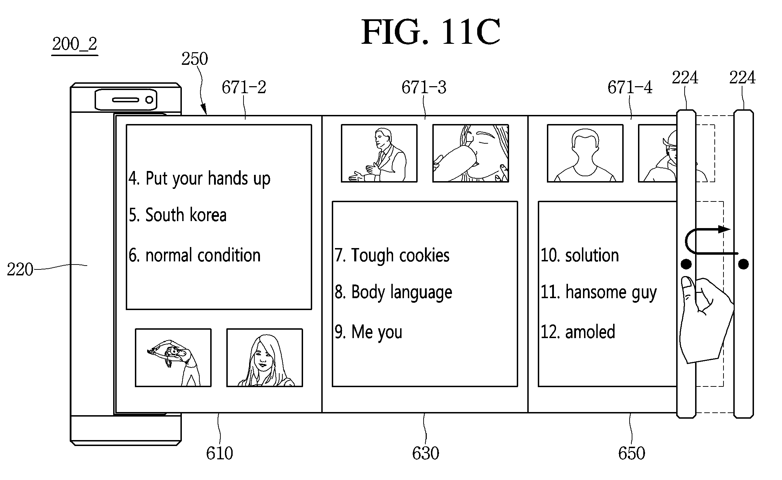

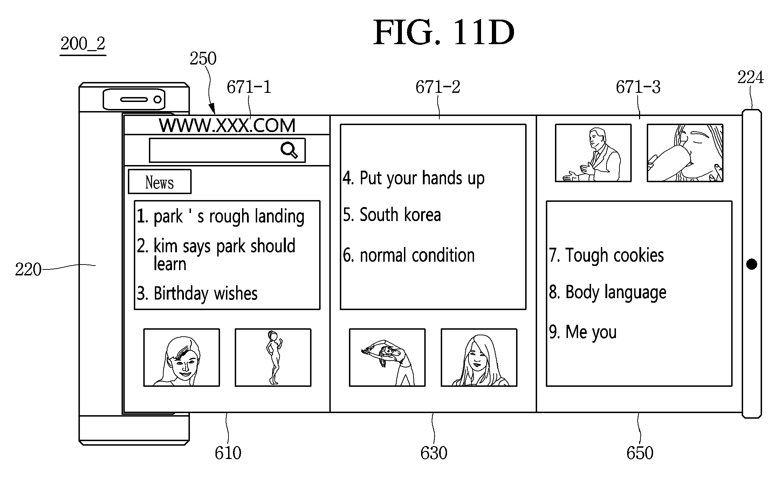

Meanwhile, in the state of Fig. 11B, if the page moving command for moving (or rolling in) the second holder 224 in the second direction and then moving (or rolling in) the second holder 224 in the first direction opposite to the second direction is received as illustrated in Fig. 11C, the control unit 290 can rightwards move each captured image by one area as illustrated in Fig. 11D. That is, as the control unit 290 receives the page moving command, the control unit 290 can display, on the first area 610, the captured image 671-1 which disappeared, and can display the captured images 671-2 and 671-3 on the second and third areas 630 and 650 respectively.

The user can easily view all web pages using the page moving command.

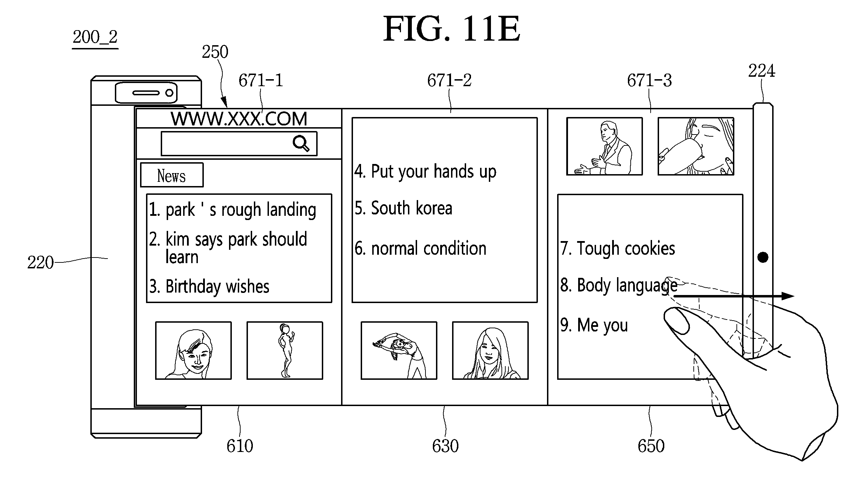

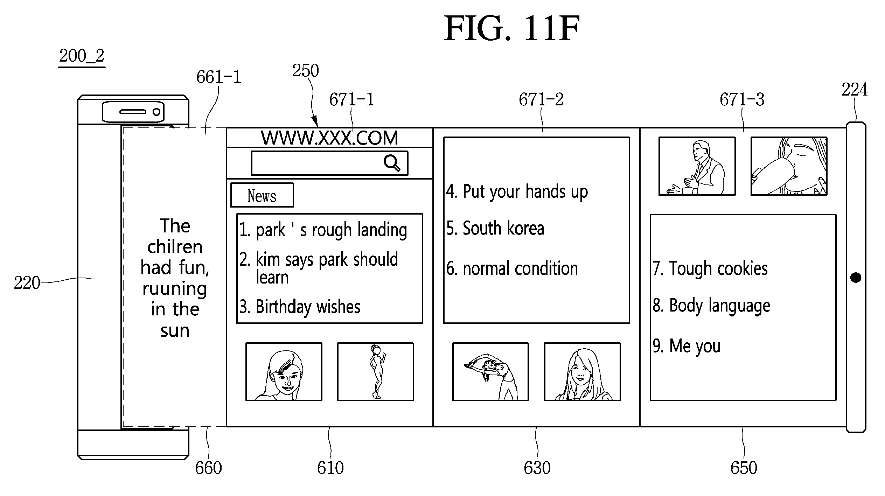

Once the user makes a motion of holding and extending the screen of the display unit 250, an image corresponding to a web page which was previously viewed can be displayed on an extended area. If a touch input is received through one surface and another surface of the third region 650, and extension of the screen of the display unit 250 is detected in Fig. 11E, the control unit 290 can display, on an extended area 660, a captured image 661-1 corresponding to a previously viewed web page as illustrated in Fig. 11F. In another example, if the screen of the display unit 250 of Fig. 11E is in a maximally extended state, a part of the captured image 671-3 displayed on the third area 650 may not be displayed as the captured image 661-1 is displayed on the first area 610.

Meanwhile, if the control unit 290 detects extension of the screen through the second holder 224 provided to the end portion of the other side of the display unit 250, the control unit 290 can display, on the extended area, hidden information while continuing to display previously displayed information.

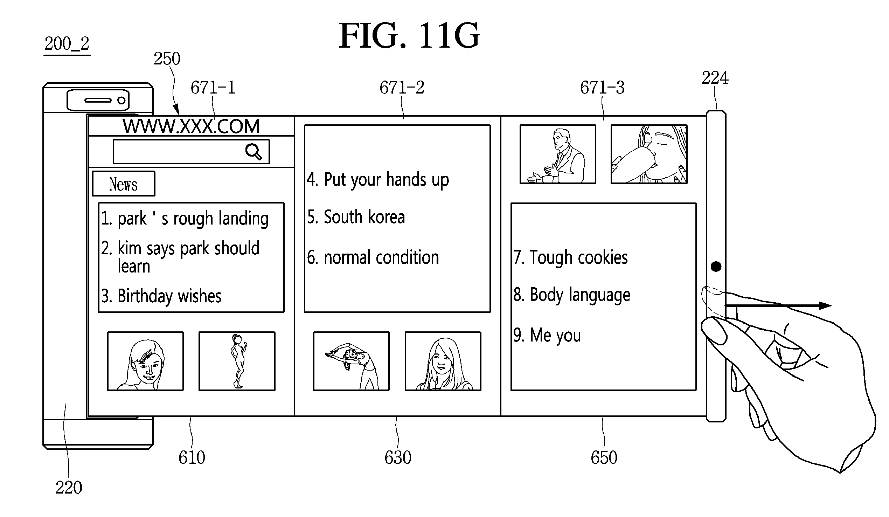

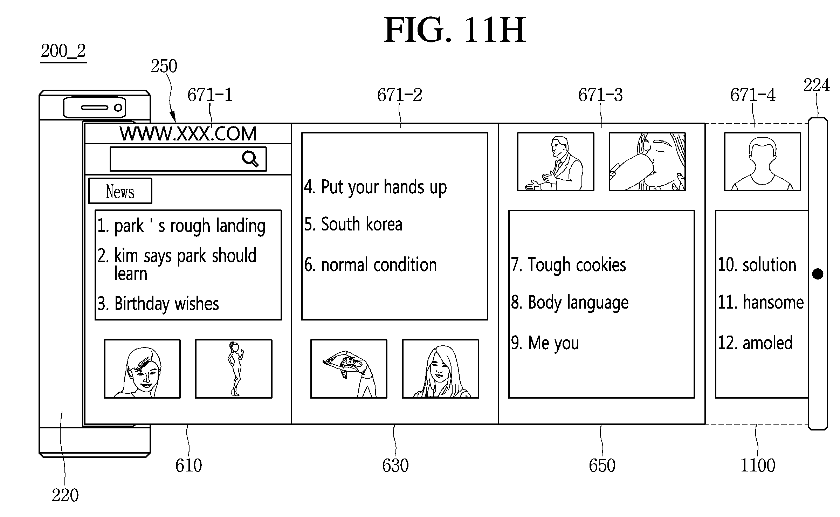

If extension of the display unit 250 is detected through the second holder 224 in Fig. 11G, the control unit 290 can display, on an extended area 1100, the captured image 671-4 which was hidden, while displaying the previously displayed captured images 671-1 to 671-3 as illustrated in Fig. 11H.

According to another embodiment, captured images corresponding to different websites can be provided according to a flicking input in a vertical view environment.

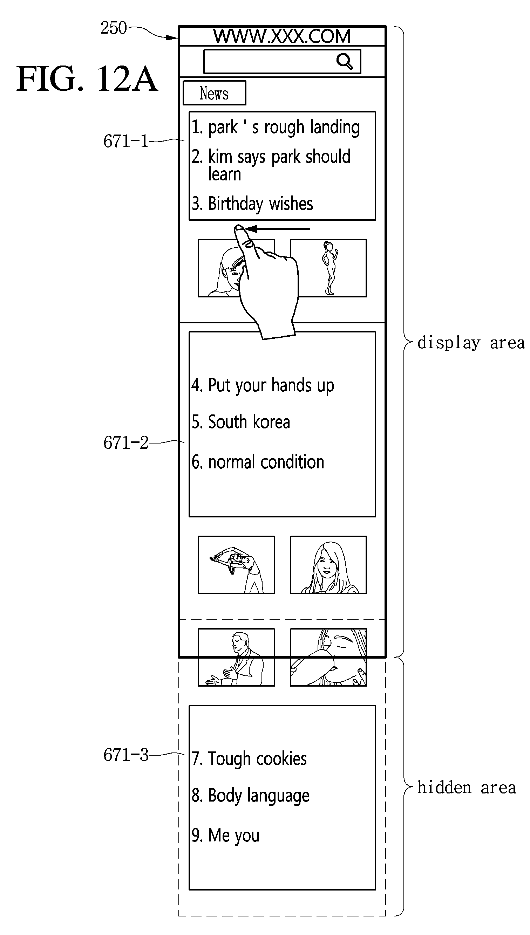

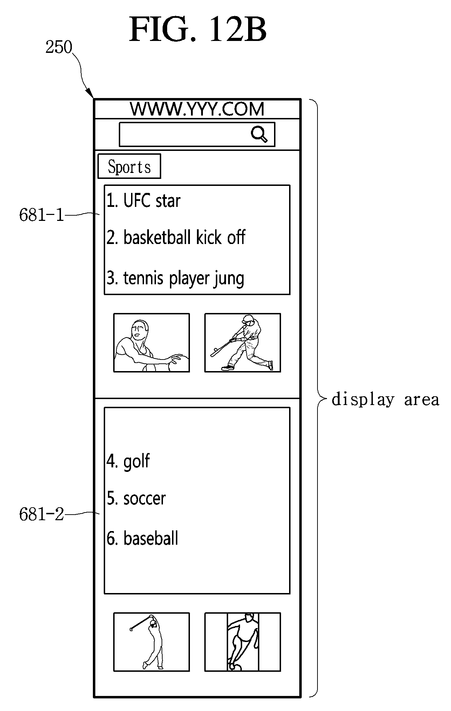

Figs. 12A and 12B are diagrams illustrating an embodiment in which captured images corresponding to different websites are provided according to a flicking input in a vertical view environment.

Referring to Fig. 12A, the display unit 250 is disposed in the vertical view direction, and aligns and displays the captured images 671-1 to 671-3 of web pages provided from the first website. In the case of an upward flicking input is received, a part of the captured image 671-3 positioned in a hidden area can be displayed on the display unit 250.

If a rightward (or leftward) flicking input is received, the control unit 290 can arrange and display the captured images 681-1 and 681-2 of web pages provided from the second website from top to bottom as illustrated in Fig. 12B.

Meanwhile, if there is no captured image corresponding to a displayed web page any more in response to a flicking input, the control unit 290 can redisplay the captured images 671-1 to 671-3 of web pages provided from the first website. For another example, if there is no captured image corresponding to a displayed web page any more in response to a flicking input, the control unit 290 can display a home screen or an entire thumbnail view. The entire thumbnail view, which displays captured images in reduced size, can be a simplified view provided for enabling the user to view desired pages with ease. For another example, if there is no captured image corresponding to a displayed web page any more in response to a flicking input, the control unit 290 can give a bounce effect such as bouncing a screen.

According to another embodiment, if a size of a captured image is smaller than a reference size in the vertical view environment, captured images of web pages provided from a single website can be sequentially provided in response to a flicking input. Furthermore, if a flicking input is received after all of the captured images of web pages provided from the single website are displayed, captured images of other web pages can be sequentially displayed.

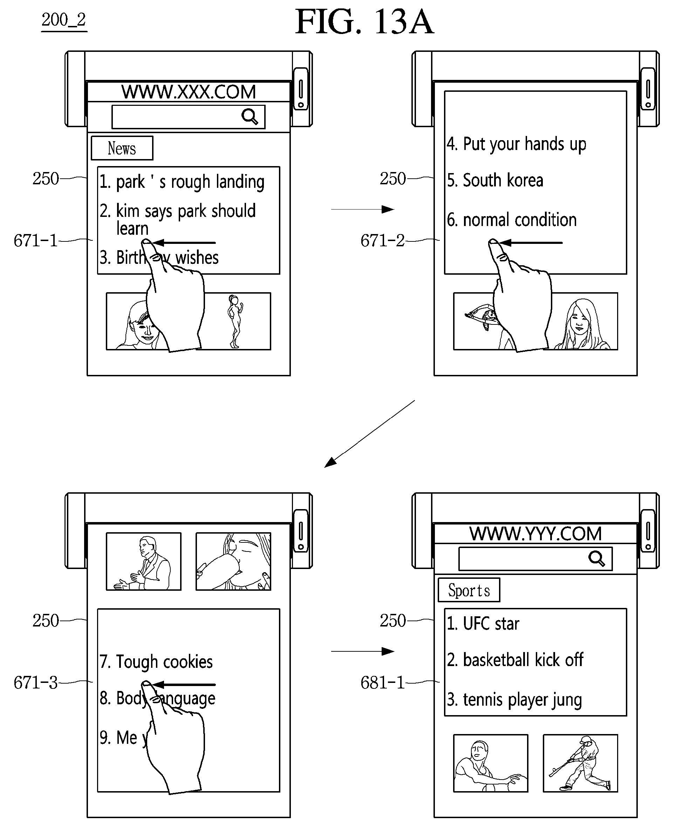

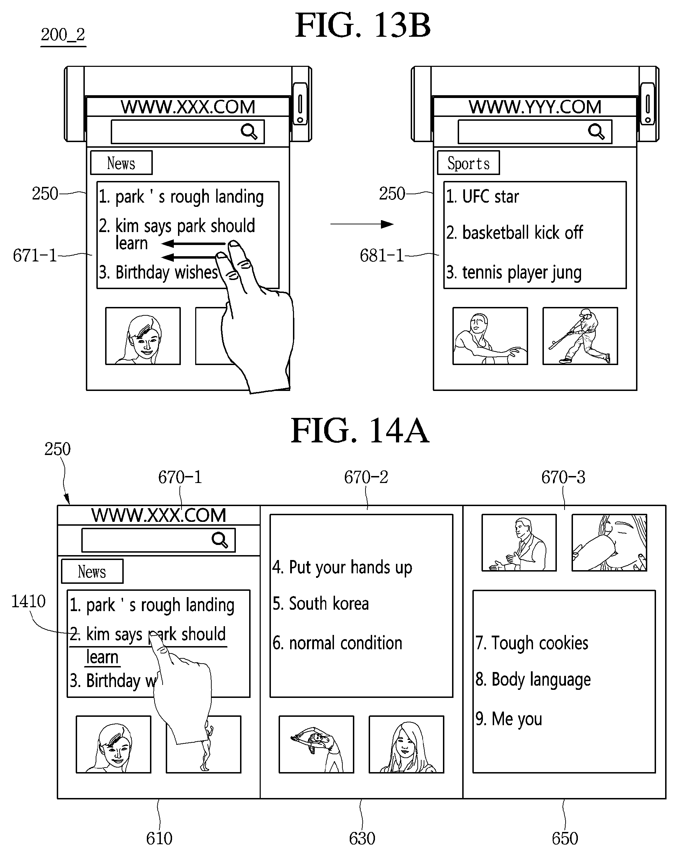

Figs. 13A and 13B are diagrams illustrating an example in which, if a size of a captured image is smaller than the reference size in the vertical view environment, captured images of web pages provided from a website are sequentially displayed in response to a flicking input.

Referring to Fig. 13A, the display unit 250 of the rollable display device 200_2 displays the captured image 671-1 of a web page provided from the first website. The size of the captured image 671-1 can be smaller than the reference size. Here, if a leftward flicking input is received, the control unit 290 can display the captured image 671-2 of a web page provided from the first website. Likewise, if a flicking input is received again, the control unit 290 can display the captured image 671-3 of a web page provided from the first website. If all of the captured images of web pages provided from the first website are displayed and a flicking input is received, the control unit 290 can display the captured image 681-1 of a web page provided from the second website. If a size of a captured image is smaller than the reference size in the vertical view environment, the user can easily check connected information using not only a vertical flicking input but also a leftward or rightward flicking input.

Referring to Fig. 13B, the display unit 250 of the rollable display device 200_2 displays the captured image 671-1 of a web page provided from the first website. The size of the captured image 671-1 can be smaller than the reference size. Here, if a left flicking input is provided through a two-point touch, the control unit 290 can directly display the captured image 681-1 of a web page provided from the second website.

Next, an example in which a plurality of web pages are rearranged on a plurality of areas according to a user input will be described with reference to the following figures. In the following description, it is assumed that content displayed on each area is a web page, but an embodiment is not limited thereto, and the content can be a captured image of a web page. That is, this example can be applied not only in a state in which an Internet application is run but also in a state in which a gallery application is run.

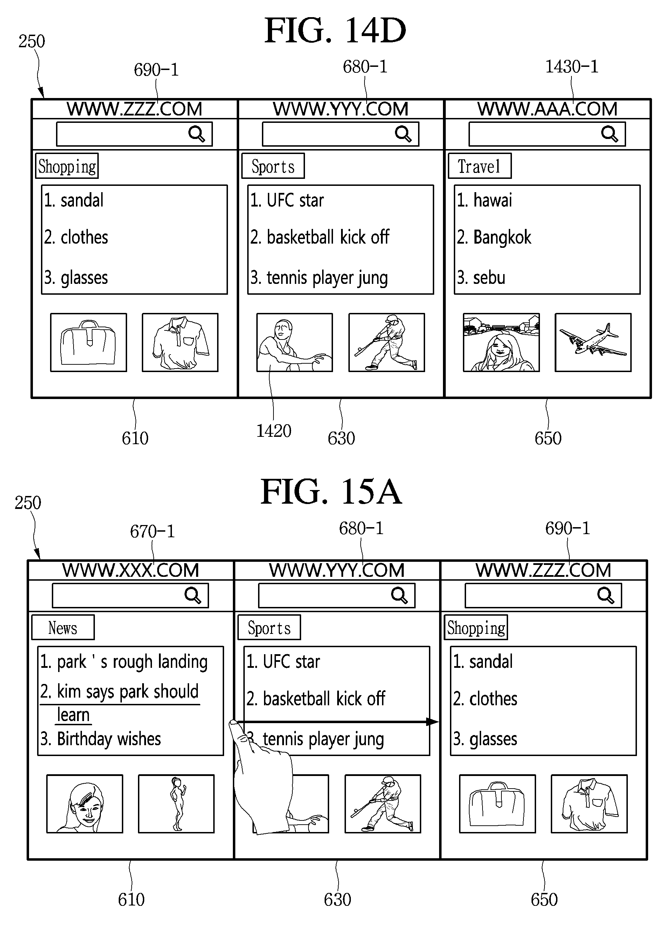

Figs. 14A to 14C are diagrams illustrating an example in which a plurality of web pages are rearranged on a plurality of areas in response to a user input according to an embodiment.

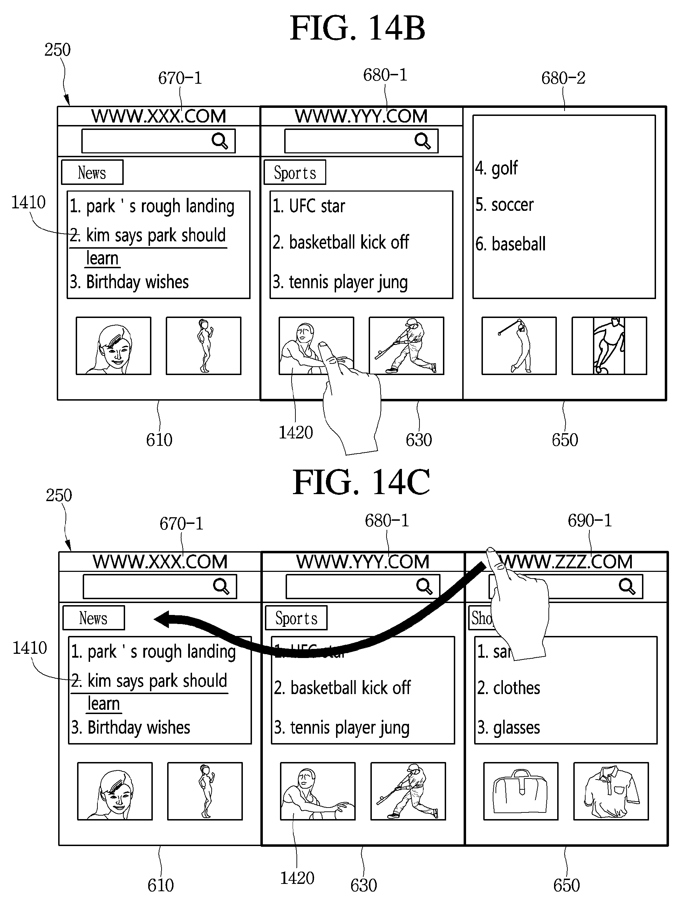

Referring to Fig. 14A, the display unit 250 displays the web pages 670-1 to 670-3 provided from the first website on the plurality of split areas 610, 630, and 650 respectively. Each web page can include at least one link for enabling connection to another website. For example, if a request for selecting a first link 1410 from the web page 670-1 is received, the control unit 290 can respectively display, on the second and third areas 630 and 650, the web pages 680-1 and 680-2 provided from the second website corresponding to the first link 1410 as illustrated in Fig. 14B. The web page 680-2 can contain information continued from the web page 680-1. That is, as the user selects the first link 1410 included in the web page 670-1, the user can view the web pages 680-1 and 680-2 corresponding to the first link 1410 together with the web page 670-1.

Likewise, if a request for selecting a second link 1420 included in the web page 680-2 is received, the control unit 290 can display, on the third area 650, the web page 690-1 provided from the third website corresponding to the second link 1420.

Meanwhile, an outer part (e.g., a contour line) surrounding the third area 650 is selected for at least a preset time, the web page 690-1 can be in a movable state. If an outer part (e.g., a contour line) surrounding the third area 650 is selected for at least the preset time and an input of moving the selected outer part to the first area 610 is received, the control unit 290 can move the web page 690-1 positioned on the third area 650 to the first area 610 as illustrated in Fig. 14C. At the same time, the control unit 290 can display a web page 1430-1 corresponding to a fourth website on the third area 650. The web page can represent a page set as a home page or registered as a favorite by the user.

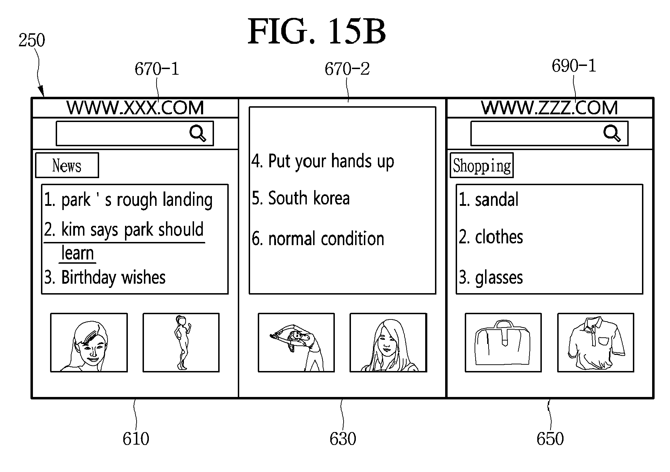

Figs. 15A and 15B are diagrams illustrating an example in which a plurality of web pages are rearranged on a plurality of areas in response to a user input according to another embodiment.

Referring to Fig. 15A, the display unit 250 displays the web pages 670-1, 680-1, and 690-1 provided from different websites on the plurality of split areas 610, 630, and 650 respectively. That is, the web page 670-1 is provided from the first website, and the web page 680-1 is provided from the second website, and the web page 690-1 is provided from the third website. The control unit 290 can receive an input of selecting an outer part (e.g., a right-side contour line) surrounding the first area 610 for at least the preset time and moving, in a direction of +x axis, the selected outer part by a distance corresponding to the second area 630. The control unit 290 can display, on the second area 630, the web page 670-2 provided from the first website in response to the received input as illustrated in Fig. 15B. The web page 670-2 can include information continued from the web page 670-1.

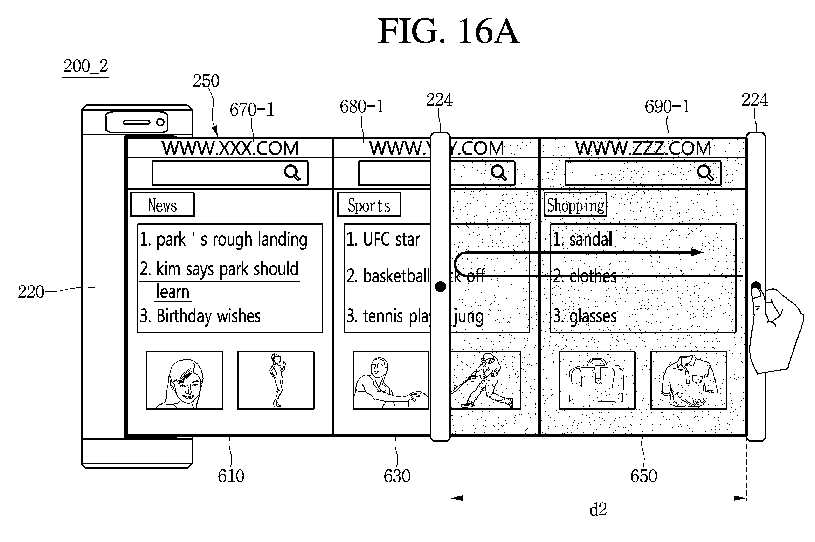

Figs. 16A to 16D are diagrams illustrating an example in which a plurality of web pages are rearranged on a plurality of areas in response to a user input according to another embodiment.

With respect to Figs. 16A to 16D, it is assumed that the display unit 250 is a display of the rollable display device 200_2.

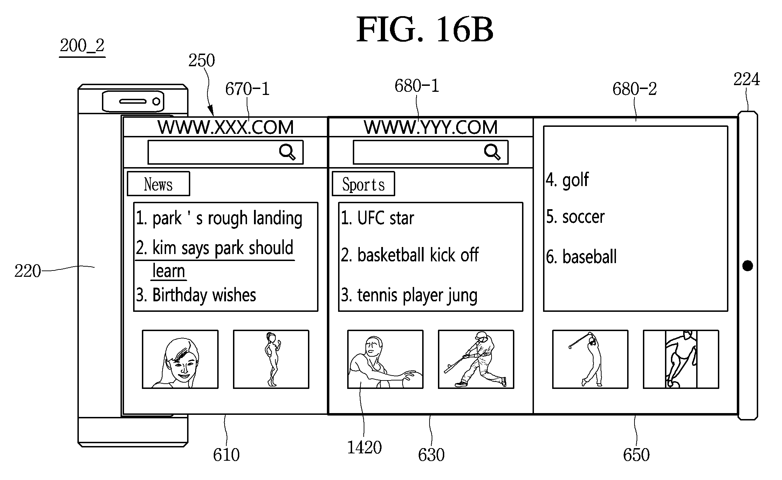

Referring to Fig. 16A, the display unit 250 displays the web pages 670-1, 680-1, and 690-1 provided from different websites on the plurality of split areas 610, 630, and 650 respectively. Here, if the second holder 224 is moved by a certain distance d2 in a direction of -x axis and then is moved by the certain distance d2 in a direction of +x axis, the control unit 290 can switch the web page 690-1 displayed on the third area 650 with the web page 680-2 provided from the second website as illustrated in Fig. 16B as illustrated in Fig. 16B. Here, the certain distance d2 can represent a distance by which the second holder 224 passes through the third area 650 and moves to one portion within the second area 630. The web page 680-2 can contain information continued from the web page 680-1.

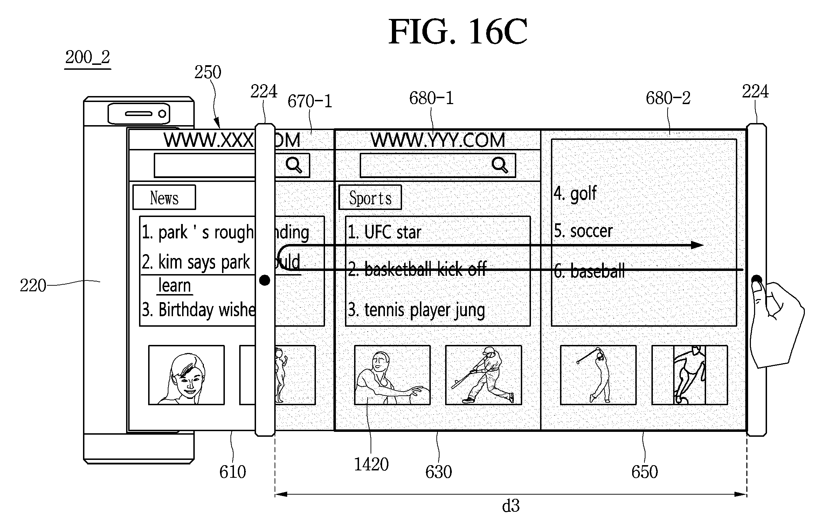

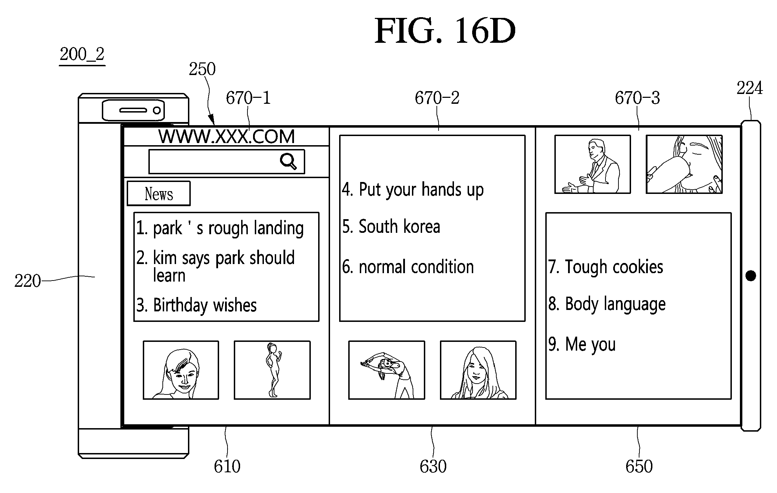

Here, if the second holder 224 is moved by a certain distance d3 in a direction of -x axis and then is moved by the certain distance d3 in a direction of +x axis as illustrated in Fig. 16C, the control unit 290 can switch the web page 680-1 displayed on the second area 630 with the web page 670-2 provided from the first website and can switch the web page 680-2 displayed on the third area 650 with the web page 670-3 provided from the first website as illustrated in Fig. 16D. The certain distance d3 can represent a distance by which the second holder 224 passes through the third and second areas 650 and 630 and moves to one portion within the second area 630.

That is, if the display unit 250 is folded and then is unfolded back while a plurality of web pages respectively provided from different websites are displayed, the plurality of web pages can be switched with web pages of a website corresponding to an area contacting the second holder 224. In this manner, the user can view and capture only web pages of a desired website.

Next, an example in which information displayed on an extended area of the display unit 250 is used if the display unit 250 is extended.

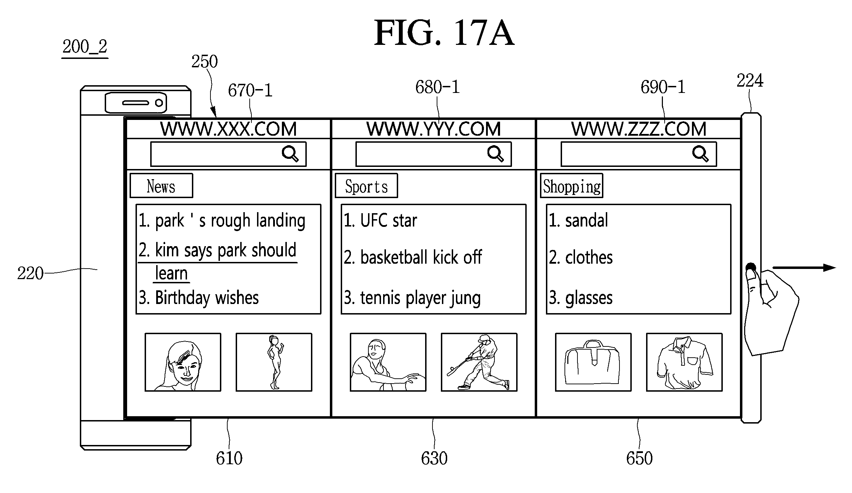

Figs. 17A to 17D are diagrams illustrating an example of using information displayed on an extended area of a display unit if the display unit is extended according to an embodiment.

With respect to Figs. 17A to 17D, it is assumed that the display unit 250 is a display of the rollable display device 200_2.

Referring to Fig. 17A, the display unit 250 displays the web pages 670-1, 680-1, and 690-1 provided from different websites on the plurality of split areas 610, 630, and 650 respectively. With respect to Fig. 17A, it is assumed that there is no web page providable by another website other than the first to third websites.

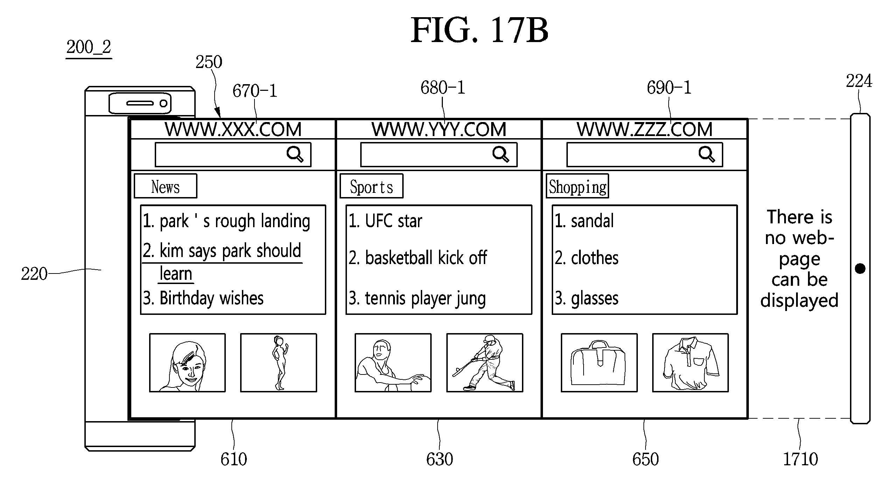

If extension of the display unit 250 is detected in the state of Fig. 17A, the control unit 290 can display a text indicating that there is no web page to be displayed on an extended area 1710 as illustrated in Fig. 17B. For another example, the control unit 290 can display various types of indicators indicating that there is no information to be displayed on the extended area 1710.

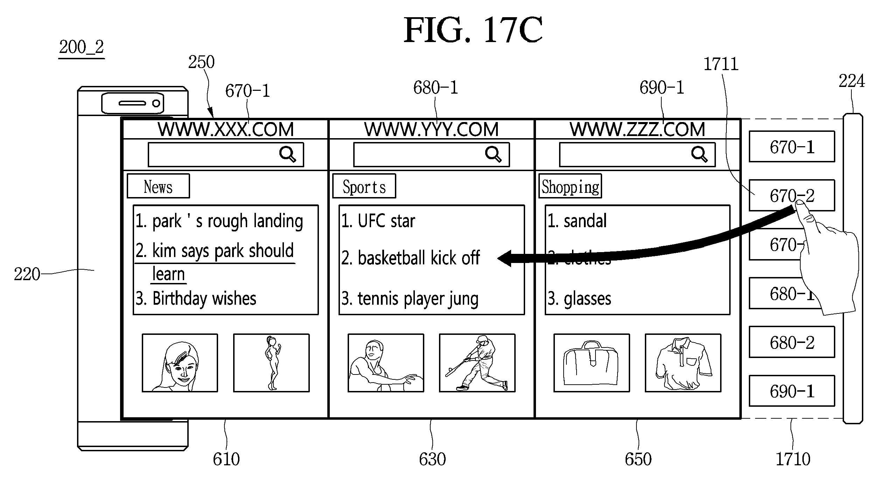

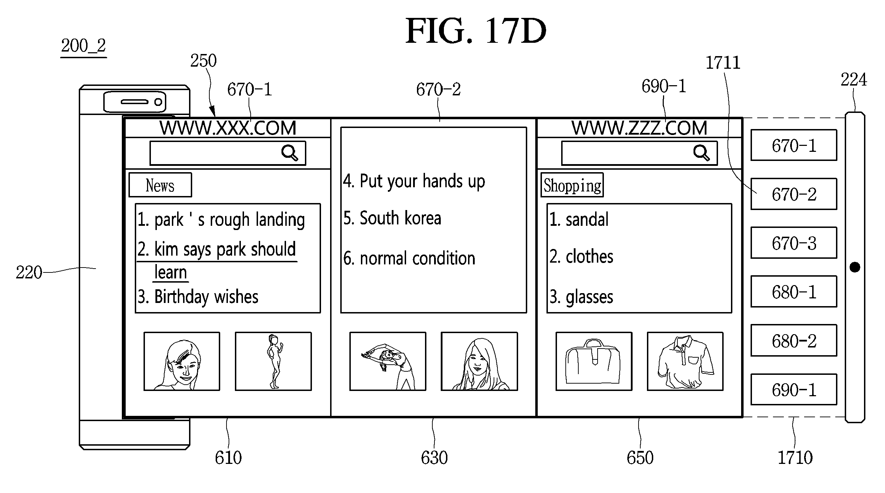

For another example, the control unit 290 can display, on the extended area 1710, thumbnail views respectively corresponding to web pages providable by the first to third websites as illustrated in Fig. 17C. If an input of selecting a thumbnail view 1711 corresponding to the website 670-2 provided from the first website and moving the selected thumbnail view 1711 to the second area 630 is received, the control unit 290 can switch the web page 680-1 displayed on the second area 630 with the web page 670-2 corresponding to the selected thumbnail view 1711 as illustrated in Fig. 17D.

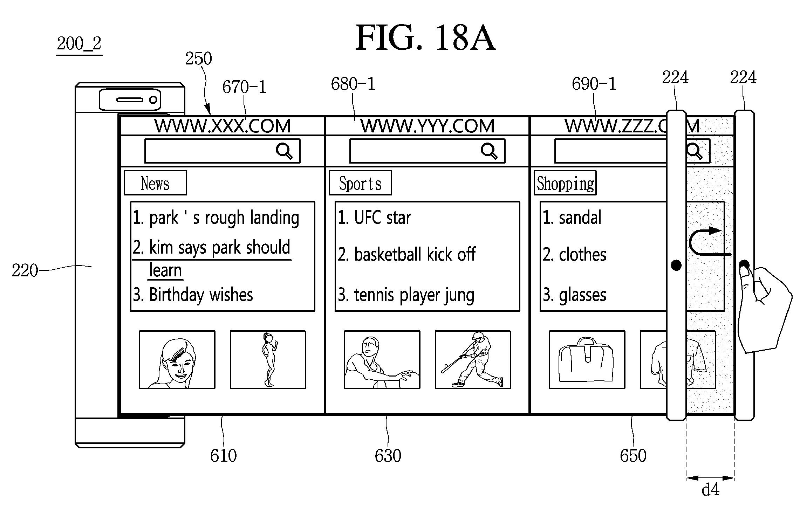

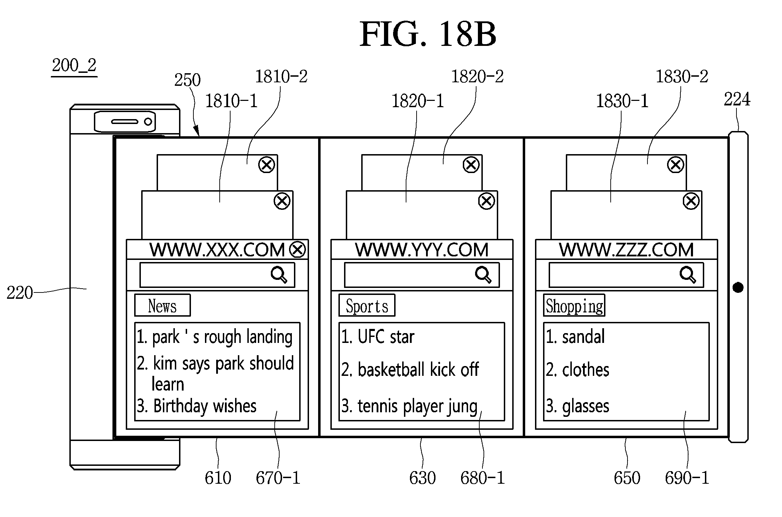

Next, Figs. 18A and 18B will be described.

Figs. 18A and 18B are diagrams illustrating an example in which a plurality of web pages are rearranged on a plurality of areas in response to a user input according to another embodiment.

Referring to Fig. 18A, the display unit 250 displays the web pages 670-1, 680-1, and 690-1 provided from different websites on the plurality of split areas 610, 630, and 650 respectively. Here, if it is detected that the screen is reduced by a certain distance d4 in a direction of -x axis and then is extended by the certain distance d4 in a direction of +x axis, the control unit 290 can display previous web pages accessed through a website corresponding to each area. That is, the web page 670-1 corresponding to the first website and web pages 1810-1 and 1810-2 previously accessed through the first website can be displayed on the first area 610. The web page 680-1 corresponding to the second website and web pages 1820-1 and 1820-2 previously accessed through the second website can be displayed on the second area 630. The web page 690-1 corresponding to the third website and web pages 1830-1 and 1830-2 previously accessed through the third website can be displayed on the third area 650.

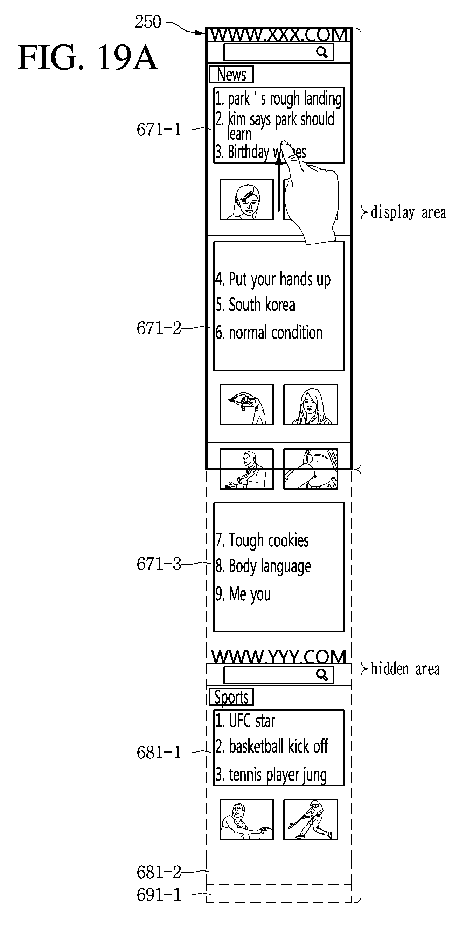

Figs. 19A to 19C are diagrams illustrating an example in which captured images are rearranged in response to a flicking input in the vertical view environment according to another embodiment.

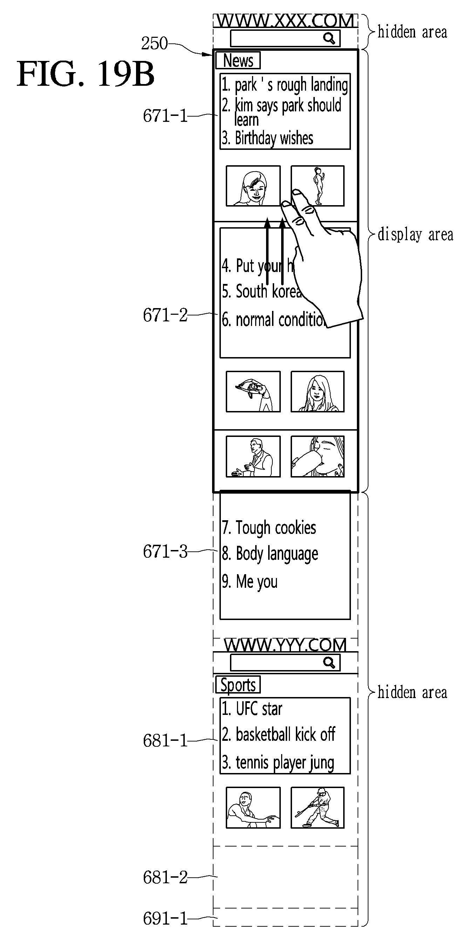

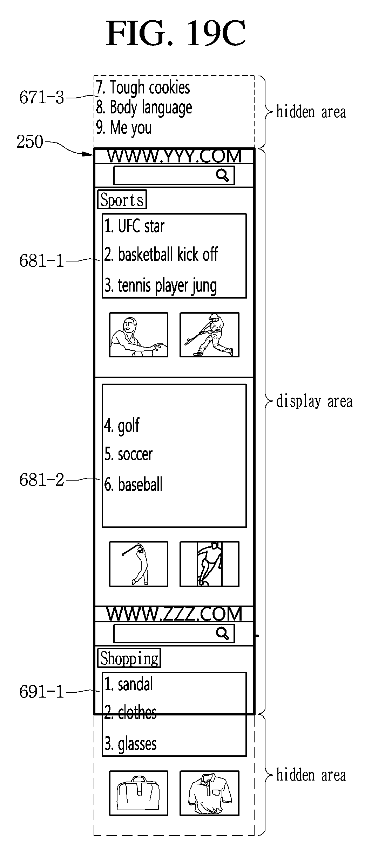

Referring to Fig. 19A, the display unit 250 is disposed in the vertical view direction, and displays the captured images 671-1 to 671-3 corresponding to web pages provided from the first website from top to bottom. A part of the captured image 671-3 may not be displayed on a display area. The captured images 681-1 and 681-2 corresponding to web pages provided from the second website and the captured image 691-1 corresponding to a web page provided from the third website can follow the captured image 671-3. If an upward flicking input is received, the control unit 290 can move the captured images upwards as illustrated in Fig. 19B. Here, if an upward flicking input is provided through a two-point touch, the control unit 290 can directly display, on the screen, the captured images 681-1 and 681-2 corresponding to the second website as illustrated in Fig. 19C.

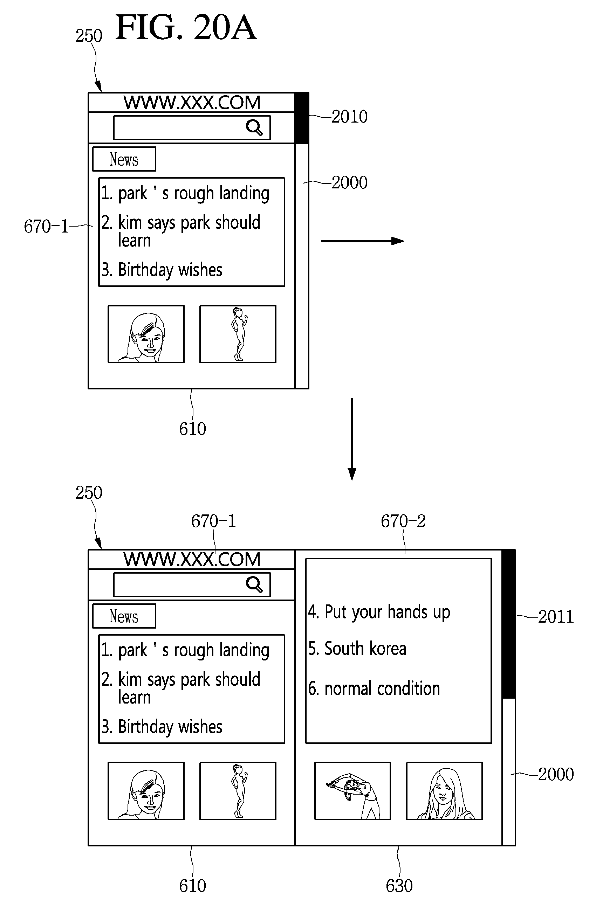

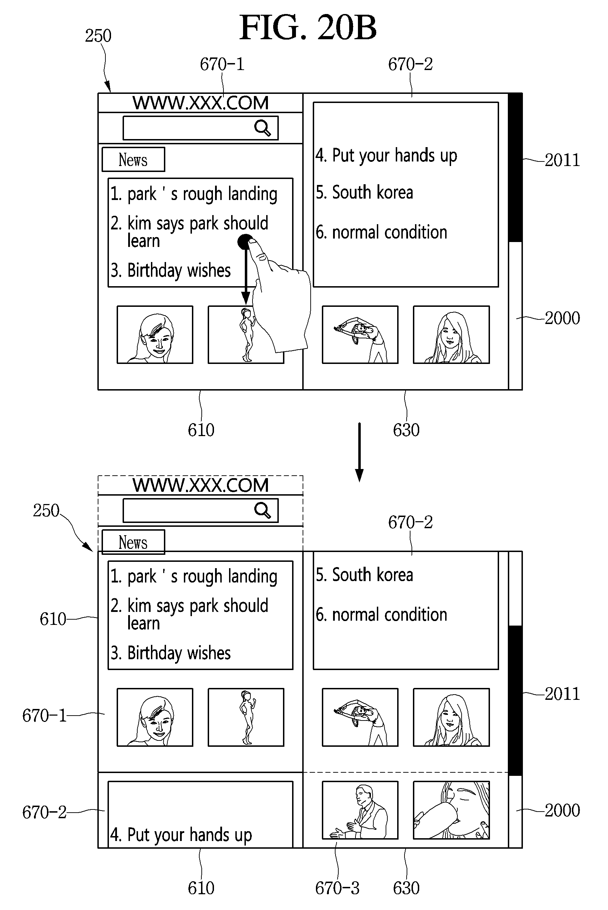

Next, Figs. 20A and 20B will be described.

Figs. 20A and 20B are diagrams illustrating that a shape or location of a scrollbar is changed as a screen is scrolled.

Referring to Fig. 20A, a scroll area 2000 and a scrollbar 2010 can be further displayed on the screen of the display unit 250. Due to the size limitation of the display area, the display unit 250 is unable to display entire information of one page. The scroll area 2000 can represent an area indicating an amount of information not displayed on one page. The scrollbar 2010 can be positioned within the scroll area 2000. The scrollbar 2010 can indicate a location of information displayed on the screen of the display unit 250 within one page.

In Fig. 20A, if the screen of the display unit 250 is extended by as much as the area 630, the control unit 290 can display, on the extended area 630, the web page 670-2 not displayed prior to the extension of the screen. At the same time, the shape of the scrollbar 2010 can be changed. That is, since the amount of displayed information of one page is increased as the screen of the display unit 250 is extended, a length of the scrollbar 2011 can be increased. However, this is merely an example, and the scrollbar 2011 can be changed in size, color, etc.

Meanwhile, the control unit 290 can change the location of the scrollbar 2011 in response to a flicking input for moving a page on the screen.

Referring to Fig. 20B, the control unit 290 can receive a flicking input for downwardly moving one portion of the area 610 of the display unit 250. The control unit 290 can upwardly move the web page 670-1 in response to the flicking input received through the area 610, and can display a part of the web page 670-2. At the same time, the control unit 290 can upwardly move the web page 670-2 on the area 630, and can display a part of the web page 670-3. At the same time, the control unit 290 can downwardly move the scrollbar 2011. As described above, the location of the scrollbar 2011 can be changed according to a flicking input.

Figs. 20A and 20B exemplarily illustrate web pages, but an embodiment is not limited thereto, and an embodiment can also be applied to a case where captured images corresponding to web pages are displayed.

Embodiments are also applicable to a case where the display unit 250 is implemented as a transparent display. In this case, the transparent display can be extended or reduced.

According to various embodiments, captured information is such provided that the captured information is suitable for a viewpoint of the user in cases if there is a difference between the display environment at the time of capturing the information and the display environment at the time of displaying the captured information, and thus the user can view the information with ease.

Furthermore, according to various embodiments, captured information can be conveniently rearranged and viewed as a display screen is extended or reduced.

The above-mentioned embodiments can be implemented as computer-readable codes in a program-recorded medium. A computer-readable medium includes any type of a recording device for storing data readably by a computer system. The computer-readable medium includes, for example, a hard disk drive, a solid state disk (SSD), a silicon disk drive (SDD), a ROM, a RAM, a CD-ROM, a magnetic tape, a floppy disk, and an optical data storage device, and can also be implemented in the form of a carrier wave (for example, transmission via the Internet). Furthermore, the above-mentioned computer can include the control unit 180 of the terminal. Therefore, the above description should not be construed as restrictive but should be considered to be merely illustrative. The scope of the present disclosure should be determined through rational interpretation of the accompanying claims, and all modifications within the equivalent scope of the present disclosure fall within the scope of the present disclosure.

## Claims

1. A display device comprising:
a display unit (250) comprising a screen that is extendable and configured to display information;
a sensing unit (270) configured to detect a size of the screen; and
a control unit (290) configured to:
receive a capture command, and based on the received capture command:
capture a rendered portion of information that is being displayed on the screen in an non-extension state; and
capture a residual portion of the information that is not being displayed on the screen in the non-non-extension state,
wherein the control unit is configured to capture the information by generating one or more images depicting a visual rendering of the information;
detect that the screen has been extended to an extension state; and
display, on the screenthat has been extended to the extension state, the captured residual portion of the information that was not displayed on the screen in the non-extension state.

2. The display device according to claim 1, wherein the control unit (290) is further configured to:
display, on the screen that has been extended in the extension state, the captured residual portion of the information while displaying the captured rendered portion of the information,
wherein the captured residual portion of the information comprises one or more images depicting a visual rendering of the residual portion of the information that was not displayed on the screen in the non-extension state, and
wherein the captured rendered portion of the information comprises one or more images depicting a visual rendering of the rendered portion of the information that was displayed on the screen in the non-extension state.

3. The display device according to claim 2, wherein:
the rendered portion of the information that was displayed on the screen in the non-extension state comprises a plurality of rendered contents that were displayed on a plurality of viewing areas of the screen in the non-extension state,
the residual portion of the information that was not displayed on the screen in the non-extension state comprises a plurality of residual contents that were not displayed on the plurality of viewing areas of the screen in the non-extension state,
each rendered content is a portion of a respective content in a plurality of contents, and each residual content is a remaining portion of the respective content in the plurality of contents, and
wherein the control unit (290) is configured to:
capture the rendered portion of the information that was displayed on the screen in the non-extension state by capturing the plurality of rendered contents that were displayed on the plurality of viewing areas, and
capture the residual portion of the information that was not displayed on the screen in the non-extension state by capturing the plurality of residual contents that were not displayed on the plurality of viewing areas,
wherein capturing a plurality of contents comprises generating a plurality of images depicting a visual rendering of the plurality of contents, each image depicting a visual rendering of a respective content.

4. The display device according to claim 3, wherein the control unit (290) is further configured to:
determine that a display command was received;
detect a display orientation of the display device at a time corresponding to the display command being received; and
determine, according to the detected display orientation of the display unit, a display arrangement for the captured plurality of rendered contents and the captured plurality of residual contents,
wherein the captured plurality of rendered contents comprises a plurality of images depicting a visual rendering of the plurality of rendered contents, each image depicting a visual rendering of a respective rendered content, and
wherein the captured plurality of residual contents comprises a plurality of images depicting a visual rendering of the plurality of residual contents, each image depicting a visual rendering of a respective residual content.

5. The display device according to claim 4, wherein the control unit (290) is further configured to:
detect that the display orientation of the display unit was a horizontal display orientation at a first time corresponding to the capture command being received, and was a vertical display orientation at a second time corresponding to the display command being received;
determine that, at the first time corresponding to the capture command being received and the display orientation of the display unit being the horizontal display orientation, the captured plurality of rendered contents and the captured plurality of residual contents were arranged according to a first display arrangement; and
generate, based on the first display arrangement at the first time and according to the vertical display orientation of the display unit at the second time, a second display arrangement for the captured plurality of rendered contents and the captured plurality of residual contents.

6. The display device according to claim 5,
wherein the control unit (290) is configured to determine that, in the first display arrangement for the horizontal display orientation of the display unit:
the plurality of viewing areas of the screen in the non-extension state comprise a first viewing area and a second viewing area of the screen; and
among the captured plurality of rendered contents, a captured first rendered content and a captured second rendered content are arranged so as to be displayed on the first viewing area and the second viewing area of the screen, respectively,
wherein the captured first rendered content and the captured second rendered content each comprises an image depicting a visual rendering of the first rendered content and an image depicting a visual rendering of the second rendered content, respectively,
wherein the control unit is configured to generate the second display arrangement for the vertical display orientation by:
arranging the captured plurality of rendered contents and the captured plurality of residual contents to be displayed in an order of the captured first rendered content, which precedes the captured first residual content, which precedes the captured second rendered content, which precedes the captured second residual content.

7. The display device according to claim 3, wherein the control unit (290) is further configured to:
receive a content list display command; and
based on receiving the content list display command:
generate a content list comprising a capture folder; and
display, on the screen, the generated content list that comprises the capture folder,
wherein the control unit is configured to generate the capture folder by:
determining whether at least one of the rendered portion of the information or the residual portion of the information comprises a web page of a website;
based on a determination that at least one of the rendered portion of the information or the residual portion of the information comprises the web page of the website:
generate a first capture view item comprising a plurality of images depicting visual representations of web pages corresponding to a plurality of websites; and
generate a second capture view item comprising a plurality of images depicting visual representations of web pages corresponding to a single website.

8. The display device according to claim 7, wherein the control unit (290) is further configured to:
determine whether a request has been received indicating a selection of the first capture view item;
based on a determination that the request has been received indicating the selection of the first capture view item, display, on the plurality of viewing areas of the screen, the plurality of images depicting visual representations of the web pages corresponding to the plurality of websites.

9. The display device according to claim 7, wherein the control unit (290) is further configured to:
determine whether a request has been received indicating a selection of the second capture view item;
based on a determination that the request has been received indicating the selection of the second capture view item, display, on the plurality of viewing areas of the screen, the plurality of images depicting visual representations of the web pages corresponding to the single website.

10. The display device according to claim 3,
wherein the plurality of viewing areas of the screen comprise a first viewing area and a second viewing area,
wherein, among the captured plurality of rendered contents, a captured first rendered content is displayed on the first viewing area, and a captured second rendered content is displayed on the second viewing area,
wherein the control unit (290) is further configured to:
determine that a pinch-out touch input has been applied to the first viewing area of the screen; and
based on a determination that the pinch-out touch input has been applied to the first viewing area of the screen, instead of displaying the captured second rendered content on the second viewing area, display the captured first residual content on the second viewing area.

11. The display device according to claim 1, wherein the display unit comprises an extendable or retractable flexible display.

12. The display device according to claim 11, wherein the control unit is further configured to:
determine that at least one of a first command or a second command has been received, wherein:
the first command indicates an extension of the screen of the display unit by a first distance followed by a retraction of the screen of the display unit by the second distance, and
the second command indicates a retraction of the screen of the display unit by the third distance followed by an extension of the screen of the display unit by the fourth distance,
based on a determination that at least one of the first command or the second command has been received, update the rendered portion of the information that is being displayed on the screen and the residual portion of the information that is not being displayed on the screen.

13. The display device according to claim 1, wherein the display unit (250) further comprises a holder provided at an end portion thereof, and
wherein the control unit (290) is further configured to:
determine whether the screen has been extended to the extension state by a user extending the screen using the holder or by a user holding and extending the screen without using the holder;
based on a determination that the command was generated by the user extending the screen using the holder, move at least part of the rendered portion of the information that was displayed on the screen in the non-extension state to be displayed on an area of the screen that is exposed by the extension of the screen; and
based on a determination that the command was generated by the user holding and extending the screen without using the holder, display, on an area of the screen that is exposed by the extension of the screen, at least part of the residual content that was not displayed on the screen in the non-extension state.

14. The display device according to claim 1, wherein the control unit (290) is further configured to:
display a scrollbar on the screen of the display unit (250); and
based on the detection that the screen has been extended to the extension state, change a shape of the scrollbar as the screen is extended.

15. The display device according to claim 14, wherein the control unit (290) is further configured to:
determine that a user has applied a flicking touch input to the screen;
move at least part of the rendered portion of the information displayed on the screen according to a direction of the flicking touch input; and
change a location of the scrollbar while moving the at least part of the rendered portion of the information displayed on the screen according to the flicking input.
